# EUROPEAN PATENT APPLICATION

(11) **EP 4 668 887 A1**
(43) Date of publication of application: **24.12.2025**
(21) Application number: 24755908.1
(22) Date of filing: 22.01.2024
(51) Int. Cl.: H04W 52/02

(54) **CONFIGURATION METHOD, TERMINAL, NETWORK DEVICE, APPARATUS, AND STORAGE MEDIUM**

(30) Priority: 17.02.2023 CN 202310180611
(71) Applicant: Datang Mobile Communications Equipment Co., Ltd., Beijing 100085 (CN)
(72) Inventor: SU, Yuwan, Beijing 100085 (CN); WANG, Jiaqing, Beijing 100085 (CN); LUO, Chen, Beijing 100085 (CN)
(74) Representative: Ipsilon
(86) International application number: PCT/CN2024/073505
(87) International publication number: WO 2024/169533

(57) **Abstract**

The embodiment of the present disclosure provides a configuration method, a terminal, a network device, an apparatus, and a storage medium. The method comprises: receiving configuration information, wherein the configuration information comprises at least one piece of discontinuous configuration information, and the discontinuous configuration information is used for determining discontinuous transmission (DTX) configuration parameters and/or discontinuous reception (DRX) configuration parameters; determining DTX and/or DRX of the network device on the basis of the configuration information. According to the method, the terminal, the network device, the apparatus, and the storage medium provided in the embodiment of the present disclosure, one or more DTX and/or DRX configurations of the network device are determined by means of at least one piece of discontinuous configuration information, and one or more DTX and/or DRX general configuration solutions are realized. Thus, the configuration efficiency and configuration flexibility of DTX and/or DRX is improved, so that the network device can be in a sleep state during DTX shutdown or non-active period and DRX shutdown or non-active period, thereby ensuring energy-saving effect of the network device.

## Description

### CROSS-REFERENCES TO RELATED APPLICATIONS

The present application claims priority to Chinese Patent Application No. 202310180611.8 filed on February 17, 2023, entitled "Configuration Method, Terminal, Network Device, Apparatus, and Storage Medium", which is hereby incorporated by reference in its entirety.

### FIELD

The present application relates to the field of communications, and in particular, to configuration methods and apparatuses, a terminal, a network device, and a storage medium.

### BACKGROUND

Discontinuous transmission (DTX) and/or discontinuous reception (DRX) are used to save energy for network devices in time domain.

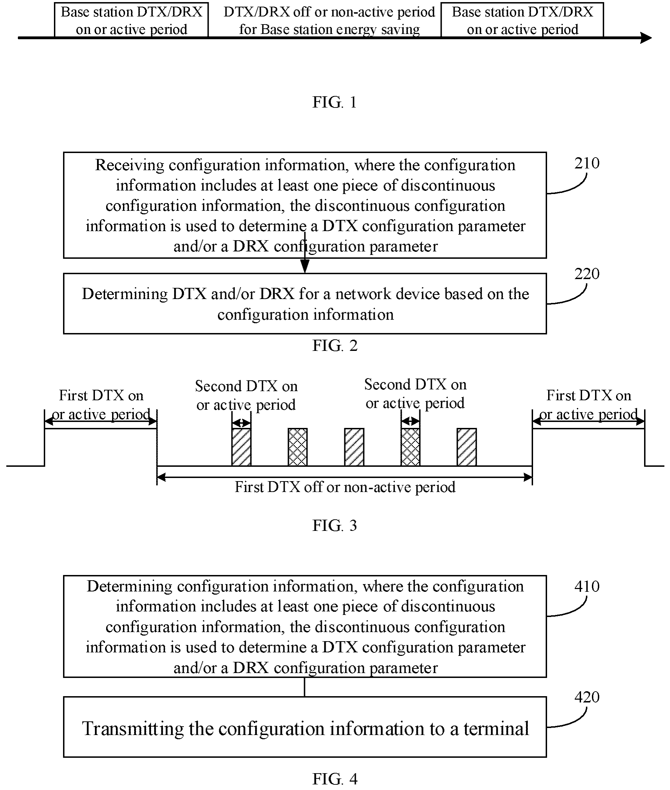

In the related art, the DTX and/or DRX energy-saving technologies of the network device include that the network device performs DTX and/or DRX, and the network device transmits information based on a configured transmission pattern. For example, FIG. 1 is a schematic diagram of DTX/DRX of a network device in the related art. As shown in FIG. 1, the network device performs signal and/or data transmission during a DTX on or active period (DTX on), and does not perform signal and/or data transmission during a DTX off or non-active period (DTX off). The network device performs signal and/or data reception during a DRX on or active period (DRX on), and does not perform signal and/or data reception during a DRX off or non-active period (DRX off).

In case that the network device performs energy saving based on the DTX and/or DRX technologies, how to improve flexibility of the DTX and/or DRX configuration is still a urgent problem to be solved.

### BRIEF SUMMARY

Embodiments of the present application provides configuration methods and apparatuses, a terminal, a network device, and a storage medium to solve a defect of poor flexibility of discontinuous transmission (DTX) and/or discontinuous reception (DRX) configuration in the related art.

An embodiment of the present application provides a configuration method, including:
receiving configuration information, where the configuration information includes at least one piece of discontinuous configuration information, the discontinuous configuration information is used to determine a DTX configuration parameter and/or a DRX configuration parameter; and
determining DTX and/or DRX for a network device based on the configuration information.

In an embodiment, according to the configuration method of the present application, in case that multiple pieces of discontinuous configuration information are present, determining the DTX and/or DRX for the network device based on the configuration information includes:
determining a piece of valid discontinuous configuration information from the multiple pieces of discontinuous configuration information; and
determining the DTX and/or DRX based on the valid discontinuous configuration information.

In an embodiment, according to the configuration method of the present application, determining the valid discontinuous configuration information from the multiple pieces of discontinuous configuration information includes:
determining the valid discontinuous configuration information from the multiple pieces of discontinuous configuration information based on indication information, at least one of an information type or a priority of the multiple pieces of discontinuous configuration information.

In an embodiment, according to the configuration method of the present application, determining the valid discontinuous configuration information from the multiple pieces of discontinuous configuration information based on the indication information includes:
determining the valid discontinuous configuration information from the multiple pieces of discontinuous configuration information based on first indication information; and/or
determining a piece of invalid discontinuous configuration information and the valid discontinuous configuration information from the multiple pieces of discontinuous configuration information based on second indication information;
where the first indication information and the second indication information belong to the indication information.

In an embodiment, according to the configuration method of the present application, determining the valid discontinuous configuration information from the multiple pieces of discontinuous configuration information based on at least one of the information type or the priority of the multiple pieces of discontinuous configuration information includes:
determining discontinuous configuration information with the information type of default as the valid discontinuous configuration information from the multiple pieces of discontinuous configuration information; and/or
determining discontinuous configuration information with the priority of first priority as the valid discontinuous configuration information from the multiple pieces of discontinuous configuration information.

In an embodiment, according to the configuration method of the present application, in case that the multiple pieces of discontinuous configuration information include at least one piece of discontinuous configuration information with the information type of default and/or at least one piece of discontinuous configuration information with the priority of first priority, determining the valid discontinuous configuration information from the multiple pieces of discontinuous configuration information based on the indication information, at least one of the information type or the priority of the multiple pieces of discontinuous configuration information includes:
determining the valid discontinuous configuration information from the multiple pieces of discontinuous configuration information or from discontinuous configuration information with the information type of candidate and/or discontinuous configuration information with the priority of second priority based on third indication information; and/or
determining the valid discontinuous configuration information and invalid discontinuous configuration information from the multiple pieces of discontinuous configuration information or from discontinuous configuration information with the information type of candidate and/or discontinuous configuration information with the priority of second priority based on fourth indication information;
where the third indication information and the fourth indication information belong to the indication information.

In an embodiment, according to the configuration method of the present application, the discontinuous configuration information with the information type of default is discontinuous configuration information corresponding to a minimum DTX identifier or a minimum DRX identifier or a minimum discontinuous configuration information identifier, where the DTX identifier, the DRX identifier and the discontinuous configuration information identifier are used to identify the discontinuous configuration information.

In an embodiment, the configuration method of the present application further includes:
determining invalid discontinuous configuration information from the multiple pieces of discontinuous configuration information based on fifth indication information; and/or
adjusting the discontinuous configuration information based on sixth indication information;
where the fifth indication information and the sixth indication information belong to the indication information.

In an embodiment, according to the configuration method of the present application, it further includes:
obtaining the indication information based on at least one of the following:
a broadcast message, a multicast message, a radio resource control (RRC) message, a layer 1 (L1) signaling, or a layer 2 (L2) signaling.

In an embodiment, according to the configuration method of the present application, a valid duration of the indication information is configured by a higher layer signaling, or protocol-agreed; the valid duration is a fixed time period or a first given quantity of a DTX or DRX cycle.

In an embodiment, according to the configuration method of the present application, the multiple pieces of discontinuous configuration information are applied to a same carrier or bandwidth partial (BWP), and/or applied to different carriers or BWPs.

In an embodiment, according to the configuration method of the present application, determining the DTX and/or DRX for the network device based on the configuration information includes:
determining all discontinuous configuration information included in the configuration information as valid discontinuous configuration information; and
determining the DTX and/or DRX based on the valid discontinuous configuration information.

In an embodiment, according to the configuration method of the present application, after determining the DTX and/or DRX for the network device based on the configuration information, the method further includes:
receiving seventh indication information, where the seventh indication information is used to indicate at least one of validation, invalidation or adjustment of discontinuous configuration information corresponding to the DTX and/or DRX.

In an embodiment, according to the configuration method of the present application, in case that the seventh indication information is received within a first transmission occasion, the seventh indication information is used to indicate validation or invalidation of a first DTX among DTXs for the network device and/or a first DRX among DRXs for the network device, or used to adjust discontinuous configuration information corresponding to a first DTX and/or a first DRX, and the first transmission occasion is a second given quantity of time units before a first DTX or first DRX active period; and
in case that the seventh indication information is received within a second transmission occasion, the seventh indication information is used to indicate validation or invalidation of at least one of a first DTX or a second DTX among DTXs for the network device and/or a first DRX or a second DRX among DRXs for the network device, or used to adjust discontinuous configuration information corresponding to at least one of a first DTX, a second DTX, a first DRX or a second DTX, and the second transmission occasion is a first DTX or first DRX active period.

In an embodiment, the configuration method of the present application further includes:
transmitting a configuration request to the network device, where the configuration request is used to request at least one of the following:
validation of discontinuous configuration information;
adjustment of discontinuous configuration information; or
invalidation of discontinuous configuration information.

In an embodiment, according to the configuration method of the present application, transmitting the configuration request to the network device includes:
transmitting the configuration request to the network device in a third transmission occasion, or in a fourth transmission occasion;
where the third transmission occasion is a third given quantity of time units before an on period of a first DTX among DTXs for the network device or a first DRX among DRXs for the network device, and the fourth transmission occasion is a first DTX or first DRX active period.

In an embodiment, according to the configuration method of the present application, at least one piece of configuration information is present; the configuration method further includes:
obtaining the configuration information based on at least one of the following: a broadcast message, a multicast message, a radio resource control (RRC) message, a layer 1 (L1) signaling, or a layer 2 (L2) signaling.

In an embodiment, according to the configuration method of the present application, the discontinuous configuration information is type-configurable configuration information, and the type-configurable configuration information is DTX configuration information and/or DRX configuration information determined based on eighth indication information;
where the DTX configuration information and/or the DRX configuration information is used to determine the DTX configuration parameter and/or the DRX configuration parameter.

In an embodiment, according to the configuration method of the present application, the discontinuous configuration information includes generic configuration parameters, and the generic configuration parameters are used to determine the DTX configuration parameter and the DRX configuration parameter; or
the discontinuous configuration information includes the DTX configuration parameter, and the DTX configuration parameter is used to determine the DTX configuration parameter; in case that the discontinuous configuration information does not include the DRX configuration parameter, the DTX configuration parameter is further used to determine the DRX configuration parameter; and
the discontinuous configuration information includes the DRX configuration parameter, and the DRX configuration parameter is used to determine the DRX configuration parameter; in case that the discontinuous configuration information does not include the DTX configuration parameter, the DRX configuration parameter is further used to determine the DTX configuration parameter; or
the discontinuous configuration information includes at least one of a common parameter, a DTX partial parameter, or a DRX partial parameter, where the common parameter and the DTX partial parameter are used to determine the DTX configuration parameter, and the common parameter and the DRX partial parameter are used to determine the DRX configuration parameter.

In an embodiment, according to the configuration method of the present application, the DTX configuration parameter includes at least one of the following:
a DTX cycle, a start position offset of a DTX on or active period, a duration of a DTX on or active period, a start position of a DTX on or active period, an end position of a DTX on or active period, an end position offset of a DTX on or active period, a start position offset of a DTX off or non-active period, a duration of a DTX off or non-active period, a start position of a DTX off or non-active period, an end position of a DTX off or non-active period, or an end position offset of a DTX off or non-active period; and
the DRX configuration parameter includes at least one of the following:
   a DRX cycle, a start position offset of a DRX on or active period, a duration of a DRX on or active period, a start position of a DRX on or active period, an end position of a DRX on or active period, an end position offset of a DRX on or active period, a start position offset of a DRX off or non-active period, a duration of a DRX off or non-active period, a start position of a DRX off or non-active period, an end position of a DRX off or non-active period, or an end position offset of a DRX off or non-active period.

In an embodiment, according to the configuration method of the present application, the DTX cycle or the DRX cycle includes a duration of at least one DTX or DRX on or active period.

In an embodiment, according to the configuration method of the present application, the DTX and DRX include a first DTX, a first DRX, a second DTX, and a second DRX;
a first DTX non-active period includes at least one second DTX active period and/or at least one second DRX active period; and/or
a first DRX non-active period includes at least one second DTX active period and/or at least one second DRX active period.

An embodiment of the present application further provides a configuration method, including:
determining configuration information, where the configuration information includes at least one piece of discontinuous configuration information, the discontinuous configuration information is used to determine a DTX configuration parameter and/or a DRX configuration parameter; and
transmitting the configuration information to a terminal.

An embodiment of the present application further provides a terminal, including a memory, a transceiver and a processor,
where the memory is used for storing a computer program; the transceiver is used for receiving and transmitting data under control of the processor; the processor is used for reading the computer program in the memory and performing the following operations:
receiving configuration information, where the configuration information includes at least one piece of discontinuous configuration information, the discontinuous configuration information is used to determine a DTX configuration parameter and/or a DRX configuration parameter; and
determining DTX and/or DRX for a network device based on the configuration information.

An embodiment of the present application provides a network device, including a memory, a transceiver and a processor,
where the memory is used for storing a computer program; the transceiver is used for receiving and transmitting data under control of the processor; the processor is used for reading the computer program in the memory and performing the following operations:
determining configuration information, where the configuration information includes at least one piece of discontinuous configuration information, the discontinuous configuration information is used to determine a DTX configuration parameter and/or a DRX configuration parameter; and
transmitting the configuration information to a terminal.

An embodiment of the present application provides a configuration apparatus, including:
a receiving unit, used for receiving configuration information, where the configuration information includes at least one piece of discontinuous configuration information, the discontinuous configuration information is used to determine a DTX configuration parameter and/or a DRX configuration parameter; and
a configuring unit, used for determining DTX and/or DRX for a network device based on the configuration information.

An embodiment of the present application provides a configuration apparatus, including:
a determining unit, used for determining configuration information, where the configuration information includes at least one piece of discontinuous configuration information, the discontinuous configuration information is used to determine a DTX configuration parameter and/or a DRX configuration parameter; and
a transmitting unit, used for transmitting the configuration information to a terminal.

An embodiment of the present application further provides a processor-readable storage medium storing a computer program, where the computer program causes a processor to perform the configuration method mentioned above.

In the configuration methods and apparatuses, the terminal, the network device, and the storage medium provided by the embodiments of the present application, at least one set of DTX and/or DRX for the network device is determined through at least one piece of discontinuous configuration information to implement at least one set of generic configuration schemes for DTX and/or DRX, which may improve the configuration efficiency and configuration flexibility of DTX and/or DRX. As such, the network device may be in a sleep state during the DTX off or non-active period, or the DRX off or non-active period, thereby ensuring the energy saving effect of the network device.

### BRIEF DESCRIPTION OF THE DRAWINGS

To clearly illustrate solutions in the embodiments of the present application or in related art, the drawings used in the description of the embodiments or in related art are briefly described below. The drawings in the following description are only some embodiments of the present application, and other drawings may be obtained according to these drawings without any creative effort for those skilled in the art.
FIG. 1 is a schematic diagram of a discontinuous transmission (DTX)/discontinuous reception (DRX) for a network device in the related art;
FIG. 2 is a first schematic flowchart of a configuration method according to an embodiment of the present application;
FIG. 3 is a schematic diagram of a DTX/DRX according to an embodiment of the present application;
FIG. 4 is a second schematic flowchart of a configuration method according to an embodiment of the present application;
FIG. 5 is a schematic structural diagram of a terminal according to an embodiment of the present application;
FIG. 6 is a schematic structural diagram of a network device according to an embodiment of the present application;
FIG. 7 is a first schematic structural diagram of a configuration apparatus according to an embodiment of the present application; and
FIG. 8 is a second schematic structural diagram of a configuration apparatus according to an embodiment of the present application.

### DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that associated objects before and after are in an "or" relationship.

In the embodiments of the present application, the term "multiple" refers to two or more than two, and other quantifiers are similar.

The solutions in the embodiments of the present application are clearly and completely described below with reference to the accompanying drawings in the embodiments of the present application. These embodiments are only a part of the embodiments of the present application, and not all of the embodiments. All other embodiments obtained by those skilled in the art based on the embodiments of the present application without any creative work belong to the scope of the present application.

Research on energy-saving technologies for communication network energy consumption, especially energy-saving technologies for 5G network energy consumption, is urgent. In response to the above problems, various technologies that are conducive to reducing energy consumption of network devices are currently discussed mainly from the time domain, frequency domain, spatial domain, power domain and other directions. A time-domain energy-saving solution may be implemented based on DTX and/or DRX for the network device. However, the configuration method for DTX and/or DRX in the related art is still limited to supporting only independent configuration of DTX and/or DRX for the network device, and has poor flexibility. There is no specific technical solution for how to implement configuration of one or more sets of DTX and/or DRX to improve the flexibility of DTX and/or DRX configuration.

On this basis, an embodiment of the present application provides a configuration method to implement configuration of at least one set of DTX and/or DRX.

FIG. 2 is a first schematic flowchart of a configuration method according to an embodiment of the present application. As shown in FIG. 2, the method is performed by a terminal. The method includes:
step 210, receiving configuration information, where the configuration information includes at least one piece of discontinuous configuration information, the discontinuous configuration information is used to determine a DTX configuration parameter and/or a DRX configuration parameter; and
step 220, determining DTX and/or DRX for a network device based on the configuration information.

The configuration information may be transmitted from the network device to the terminal, and accordingly, the terminal may receive the configuration information and apply the configuration information to determine the DTX and/or DRX for the network device. It may be understood that the operation of receiving the configuration information here may be performed once or multiple times at the terminal, that is, the configuration information received at the terminal may be one or more pieces.

For single piece of configuration information, or each piece of configuration information in multiple pieces of configuration information, the configuration information includes at least one piece of discontinuous configuration information.

Here, the discontinuous configuration information may be used to determine the DTX configuration parameter and/or the DRX configuration parameter. It may be understood that the DTX configuration parameter is used to implement the DTX configuration for the network device, and the DRX configuration parameter is used to implement the DRX configuration for the network device. The discontinuous configuration information may directly include the DTX configuration parameter and/or the DRX configuration parameter, and may also include associated parameters for determining the DTX configuration parameter and/or the DRX configuration parameter. The embodiment of the present application does not specifically limit this. Here, the DTX configuration parameter may be used to determine a DTX on or active period for the network device, and a DTX off or non-active period for the network device. The DRX configuration parameter may be used to determine a DRX on or active period for the network device, and a DRX off or non-active period for the network device. Here, the on or active period of the DTX for the network device may be also referred to as a DTX non-energy-saving state or period for the network device, or a first period of the DTX for the network device. The present application does not limit the name of the DTX on or active period. The DTX off or non-active period for the network device may be also referred to as a DTX energy-saving state or period for the network device, or a second period of the DTX for the network device. The name of the DTX on or active period is not limited in the present application. The DRX on or active period for the network device may be also referred to as a DRX non-energy-saving state or period for the network device, or a first period of the DRX for the network device. The present application does not limit the name of the DRX on or active period. The DRX off or non-active period for the network device may be also referred to as a DRX energy-saving state or period for the network device, or a second period of the DRX for the network device. The name of the DRX on or active period is not limited in the present application. The network device transmits a control signaling, data, a signal, etc. in the DTX on or active period or the non-energy-saving period or the first period. The network device does not perform data scheduling in the DTX off or non-active period or the energy-saving period or the second period. That is, the network device does not transmit control signaling to dynamically schedule uplink data and/or downlink data, and does not transmit downlink data dynamically scheduled by the control signaling. The network device receives data, a signal, etc. in the DRX on or active period or the non-energy-saving period or the first period. The network device does not perform data scheduling in the DRX off or non-active period or the energy-saving period or the second period. That is, the network device does not receive uplink data dynamically scheduled by a control signaling.

Therefore, in case that the terminal may receive one or more pieces of configuration information, and one piece of configuration information includes at least one piece of discontinuous configuration information, a terminal side has at least one piece of discontinuous configuration information that may be used to determine the DTX configuration parameter and/or DRX configuration parameter. Based on this, the terminal may determine the DTX and/or DRX for the network device. It may be understood that the DTX and/or DRX for the network device determined here may be one set or multiple sets.

Furthermore, in the procedure of determining the DTX and/or DRX for the network device based on the received configuration information, the terminal may determine each piece of discontinuous configuration information received as the valid discontinuous configuration information, and use a DTX configuration parameter and/or a DRX configuration parameter determined from each piece of discontinuous configuration information to determine the corresponding DTX and/or DRX. The terminal may also select default discontinuous configuration information from each piece of discontinuous configuration information received as the valid discontinuous configuration information, and use a DTX configuration parameter and/or a DRX configuration parameter determined from the valid discontinuous configuration information to determine the corresponding DTX and/or DRX. The terminal may also determine the valid discontinuous configuration information from each piece of discontinuous configuration information received based on instruction of the network device, and use a DTX configuration parameter and/or a DRX configuration parameter determined from the valid discontinuous configuration information to determine the corresponding DTX and/or DRX, which is not specifically limited in the embodiments of the present application.

In the configuration method provided by the embodiment of the present application, at least one set of DTX and/or DRX for the network device is determined through at least one piece of discontinuous configuration information received to implement at least one set of generic configuration schemes for DTX and/or DRX, which may improve the configuration efficiency and configuration flexibility of DTX and/or DRX. As such, the network device may be in a sleep state during the DTX off or non-active period, or the DRX off or non-active period, thereby ensuring the energy saving effect of the network device.

Based on the foregoing embodiment, in case that multiple pieces of discontinuous configuration information are present, step 220 includes:
determining a piece of valid discontinuous configuration information from the multiple pieces of discontinuous configuration information; and
determining the DTX and/or DRX based on the valid discontinuous configuration information.

In an embodiment, for the case that multiple pieces of discontinuous configuration information are present at the terminal side, it may be that the terminal receives one piece of configuration information, and the configuration information includes multiple pieces of discontinuous configuration information, or it may be that the terminal receives multiple pieces of configuration information, and each piece of configuration information includes at least one piece of discontinuous configuration information. It may be understood that the multiple pieces of discontinuous configuration information here may come from the same configuration information or from different pieces of configuration information.

For the case that multiple pieces of discontinuous configuration information are present, in the procedure of determining the DTX and/or DRX for the network device, at least one piece of valid discontinuous configuration information may be selected from the above multiple pieces of discontinuous configuration information, and the DTX and/or DRX may be determined based on a DTX configuration parameter and/or a DRX configuration parameter determined from the valid discontinuous configuration information.

It may be understood that the valid discontinuous configuration information here may be one or more pieces, and the valid discontinuous configuration information may be part or all of the above multiple pieces of discontinuous configuration information. The valid discontinuous configuration information may be selected based on the pre-agreed default settings, or based on the indication information transmitted from the network device, which is not specifically limited in the embodiment of the present application.

In the method provided in the embodiment of the present application, in case that multiple pieces of discontinuous configuration information are present, the configuration flexibility of DTX and/or DRX may be improved by selecting the valid discontinuous configuration information to determine DTX and/or DRX, thereby ensuring the energy saving effect of the network device.

Based on the foregoing embodiment, in case that multiple pieces of discontinuous configuration information are present, in step 220, determining the valid discontinuous configuration information from the multiple pieces of discontinuous configuration information includes:
determining the valid discontinuous configuration information from the multiple pieces of discontinuous configuration information based on indication information, at least one of an information type or a priority of the multiple pieces of discontinuous configuration information.

In an embodiment, in case that multiple pieces of discontinuous configuration information are present, selecting valid discontinuous configuration information from the multiple pieces of discontinuous configuration information may be implemented based on the indication information. The indication information here is transmitted from the network device to the terminal to implement validation/invalidation/switching/adjustment of the discontinuous configuration information. Thus, the terminal may validate one or several pieces of discontinuous configuration information based on indication of the indication information to determine the one or several pieces of discontinuous configuration information as the valid discontinuous configuration information. Alternatively, the terminal may switch one or several pieces of discontinuous configuration information to another one or several pieces of discontinuous configuration information based on indication of the indication information to determine one or several pieces of discontinuous configuration information as invalid discontinuous configuration information, and another one or several pieces of discontinuous configuration information as valid discontinuous configuration information.

The indication information here may be a radio resource control (RRC) message, a layer 1 (L1) signaling or a layer 2 (L2) signaling, etc. For example, the network device may broadcast/multicast the configuration information, and indicate at least one piece of discontinuous configuration information to be valid/invalid/switched/adjusted through a user equipment (UE)-specific RRC signaling. For another example, the network device may broadcast/multicast the configuration information, and indicate at least one piece of discontinuous configuration information to be valid/invalid/switched/adjusted through the L1 signaling; or the network device may broadcast/multicast the configuration information, and indicate at least one piece of discontinuous configuration information to be valid/invalid/switched/adjusted through the L2 signaling; or the network device may issue the configuration information through the UE-specific RRC signaling, and indicate at least one piece of discontinuous configuration information to be valid/invalid/switched/adjusted through the L1 signaling; or, the network device may issue the configuration information through the UE-specific RRC signaling, and indicate at least one piece of discontinuous configuration information to be valid/invalid/switched/adjusted through the L2 signaling.

In addition, in case that multiple pieces of discontinuous configuration information are present, selecting valid discontinuous configuration information from the multiple pieces of discontinuous configuration information may be implemented based on an information type and/or a priority of the discontinuous configuration information. Here, the information type of the discontinuous configuration information may be default or candidate, and the priority of the discontinuous configuration information may be one of multiple pre-determined priorities, such as a first priority and a second priority. On this basis, the terminal may select discontinuous configuration information with the information type of default from multiple pieces of discontinuous configuration information as the valid discontinuous configuration information, or the terminal may select discontinuous configuration information with the highest priority from multiple pieces of discontinuous configuration information as the valid discontinuous configuration information, which is not limited in the embodiment of the present application.

Furthermore, in case that multiple pieces of discontinuous configuration information are present, selecting valid discontinuous configuration information from the multiple pieces of discontinuous configuration information may be implemented in combination with the indication information, an information type and/or priority of the discontinuous configuration information. For example, in case that the indication information is not received, the valid discontinuous configuration information may be selected based on the information type and/or priority of the discontinuous configuration information; if the indication information is subsequently received, new valid discontinuous configuration information may be selected from the currently invalid discontinuous configuration information based on the indication information, or at least one piece of discontinuous configuration information in all the discontinuous configuration information may be determined to be valid or invalid based on the indication information, which is not limited in the embodiment of the present application.

In the method provided by the embodiment of the present application, the valid discontinuous configuration information is determined based on indication information, at least one of the information type or the priority of the multiple pieces of discontinuous configuration information, which provides a rich and flexible feasible solution for the configuration of DTX and/or DRX.

Based on the foregoing embodiment, in case that multiple pieces of discontinuous configuration information are present, in step 220, determining the valid discontinuous configuration information from the multiple pieces of discontinuous configuration information based on the indication information includes:
determining, based on first indication information, the valid discontinuous configuration information from the multiple pieces of discontinuous configuration information; and/or
determining, based on second indication information, a piece of invalid discontinuous configuration information and the valid discontinuous configuration information from the multiple pieces of discontinuous configuration information;
where the first indication information and the second indication information belong to the indication information.

In an embodiment, in the solution of determining the valid discontinuous configuration information based on the indication information, the indication information may be used to indicate validation of the discontinuous configuration information, and may also be used to indicate switching of the discontinuous configuration information.

The first indication information is indication information used to indicate validation of the discontinuous configuration information. After receiving the first indication information, the terminal may determine the discontinuous configuration information indicated by the first indication information from multiple pieces of discontinuous configuration information, that is, the first indication information indicates the valid discontinuous configuration information, and the terminal may determine the discontinuous configuration information as the valid discontinuous configuration information. It may be understood that the discontinuous configuration information indicated by the first indication information may be one or more, and the discontinuous configuration information indicated by the first indication information may come from the same configuration information or from different pieces of configuration information, which is not limited in the embodiment of the present application.

The second indication information is indication information used to indicate switching of the discontinuous configuration information. After receiving the second indication information, the terminal may determine the discontinuous configuration information to be switched indicated by the second indication information from multiple pieces of discontinuous configuration information, that is, the second indication information indicates invalid discontinuous configuration information and valid discontinuous configuration information, and the terminal may determine the invalid discontinuous configuration information as invalid discontinuous configuration information, and determine the valid discontinuous configuration information as valid discontinuous configuration information. It may be understood that the valid and invalid discontinuous configuration information indicated by the second indication information may both be one or more, and the valid and invalid discontinuous configuration information indicated by the second indication information may come from the same configuration information or from different pieces of configuration information, which is not limited in the embodiment of the present application.

In the method provided by the embodiment of the present application, the valid discontinuous configuration information is determined by indicating the validation or switching of the discontinuous configuration information based on indication information, at least one of the information type or the priority of the multiple pieces of discontinuous configuration information, which provides a rich and flexible feasible solution for the configuration of DTX and/or DRX.

Based on any of the foregoing embodiments, in case that multiple pieces of discontinuous configuration information are present, in step 220, determining the valid discontinuous configuration information from the multiple pieces of discontinuous configuration information based on at least one of the information type or priority of the multiple pieces of discontinuous configuration information includes:
determining discontinuous configuration information with the information type of default as the valid discontinuous configuration information from the multiple pieces of discontinuous configuration information; and/or
determining discontinuous configuration information with the priority of first priority as the valid discontinuous configuration information from the multiple pieces of discontinuous configuration information.

In an embodiment, in case that multiple pieces of discontinuous configuration information are present and the discontinuous configuration information is pre-determined with the information type, the valid discontinuous configuration information may be determined based on the information type of the multiple pieces of discontinuous configuration information. The information type here may include two types: default and candidate. In case that the valid discontinuous configuration information is selected based on the information type, the discontinuous configuration information with the information type of default may be directly selected from the multiple pieces of discontinuous configuration information as the valid discontinuous configuration information. Among the multiple pieces of discontinuous configuration information, there may be one or more pieces of discontinuous configuration information with the information type of default, and preferably, there may be one piece of discontinuous configuration information with the information type of default.

In addition, the discontinuous configuration information with the information type of default and the discontinuous configuration information with the information type of candidate may come from the same configuration information or from different pieces of configuration information. For example, the first configuration information includes the discontinuous configuration information with the information type of default, and the second configuration information includes at least one piece of discontinuous configuration information with the information type of candidate; or the second configuration information includes the discontinuous configuration information with the information type of default, and the first configuration information includes at least one piece of discontinuous configuration information with the information type of candidate.

In addition, in case that multiple pieces of discontinuous configuration information are present and the discontinuous configuration information is given with a priority, the valid discontinuous configuration information may be determined based on the priority of the multiple pieces of discontinuous configuration information. The priority here may be one of the multiple priority levels divided in advance. In case that the valid discontinuous configuration information is selected based on the priority, the discontinuous configuration information with the first priority may be directly selected from the multiple pieces of discontinuous configuration information and be determined as the valid discontinuous configuration information. The first priority here is the first priority level pre-agreed among the multiple priority levels, for example, it may be the highest priority among the multiple priority levels.

In the method provided by the embodiment of the present application, the valid discontinuous configuration information is determined based on the information type or the priority of the discontinuous configuration information, which provides a rich and flexible feasible solution for the configuration of DTX and/or DRX.

Based on any of the above embodiments, in case that the multiple pieces of discontinuous configuration information include at least one piece of discontinuous configuration information with the information type of default and/or at least one piece of discontinuous configuration information with the priority of first priority, in step 220, determining the valid discontinuous configuration information from the multiple pieces of discontinuous configuration information based on the indication information, at least one of the information type or the priority of the multiple pieces of discontinuous configuration information includes:
determining the valid discontinuous configuration information from the multiple pieces of discontinuous configuration information or from discontinuous configuration information with the information type of candidate and/or discontinuous configuration information with the priority of second priority based on third indication information; and/or
determining the valid discontinuous configuration information and invalid discontinuous configuration information from the multiple pieces of discontinuous configuration information or from discontinuous configuration information with the information type of candidate and/or discontinuous configuration information with the priority of second priority based on fourth indication information;
where the third indication information and the fourth indication information belong to the indication information.

In an embodiment, in case that multiple pieces of discontinuous configuration information are present and the discontinuous configuration information is given with a priority, selecting valid discontinuous configuration information from the multiple pieces of discontinuous configuration information may be implemented in combination with the indication information, the information type and/or the priority of the discontinuous configuration information.

Further, in case that multiple pieces of discontinuous configuration information are given with the information type and/or the priority, the discontinuous configuration information with the information type of default and/or priority of the first priority may be directly determined as the valid discontinuous configuration information. On this basis, the indication information may validate or switch at least one of the discontinuous configuration information with information type of candidate and/or priority of the second priority, or the indication information may validate or switch at least one of all the above discontinuous configuration information. Here, the second priority is another priority other than the first priority.

The third indication information is indication information used to indicate validation of the discontinuous configuration information. After receiving the third indication information, the terminal may determine the discontinuous configuration information indicated by the third indication information from discontinuous configuration information with information type of candidate and/or priority of the second priority, that is, the third indication information indicates the valid discontinuous configuration information, and the terminal may determine the discontinuous configuration information as the valid discontinuous configuration information.

Alternatively, after receiving the third indication information, the terminal may ignore the information type and/or priority of the discontinuous configuration information, determine the discontinuous configuration information indicated by the third indication information from all above pieces of discontinuous configuration information, that is, the third indication information indicates the valid discontinuous configuration information , and the terminal may determine the discontinuous configuration information as the valid discontinuous configuration information.

It may be understood that the discontinuous configuration information indicated by the third indication information may be one or more, and the discontinuous configuration information indicated by the third indication information may come from the same configuration information or from different pieces of configuration information, which is not limited in the embodiment of the present application.

The fourth indication information is indication information used to indicate switching of the discontinuous configuration information. After receiving the fourth indication information, the terminal may determine the discontinuous configuration information to be switched indicated by the fourth indication information indication information from the discontinuous configuration information with the information type of candidate and/or with the priority of the second priority, that is, the fourth indication information indicates invalid discontinuous configuration information and valid discontinuous configuration information, and the terminal may determine the invalid discontinuous configuration information as invalid discontinuous configuration information, and determine the valid discontinuous configuration information as valid discontinuous configuration information.

Alternatively, after receiving the fourth indication information, the terminal may ignore the information type and/or priority of the discontinuous configuration information, determine the discontinuous configuration information to be switched indicated by the fourth indication information from all above pieces of discontinuous configuration information, that is, the fourth indication information indicates invalid discontinuous configuration information and valid discontinuous configuration information, and the terminal may determine the invalid discontinuous configuration information as invalid discontinuous configuration information, and determine the valid discontinuous configuration information as valid discontinuous configuration information.

It may be understood that the valid and invalid discontinuous configuration information indicated by the fourth indication information may be one or more, and the valid and invalid discontinuous configuration information indicated by the fourth indication information may come from the same configuration information or from different pieces of configuration information, which is not limited in the embodiment of the present application.

For example, in case that the terminal does not receive the third indication information and the fourth indication information, the terminal may determine the discontinuous configuration information with the information type of default from multiple pieces of discontinuous configuration information as the valid configuration information;
in case of receiving the third indication information or the fourth indication information, the terminal may determine the valid discontinuous configuration information from discontinuous configuration information with the information type of candidate, or determine the invalid discontinuous configuration information and the valid discontinuous configuration information from discontinuous configuration information with the information type of candidate based on the third indication information or the fourth indication information.

Furthermore, the terminal may determine whether discontinuous configuration information that needs to be validated, invalidated or adjusted is present among the discontinuous configuration information with the information type of candidate based on the third indication information or the fourth indication information; or the terminal may determine which discontinuous configuration information among the discontinuous configuration information with the information type of candidate needs to be validated, invalidated or adjusted based on the third indication information or the fourth indication information.

For different terminals, same/different at least one discontinuous configuration information with the information type of candidate may be validated/invalidated/switched/adjusted based on the third indication information or the fourth indication information.

In the method provided by the embodiment of the present application, the valid discontinuous configuration information is determined in combination with the indication information as well as the information type or the priority of the discontinuous configuration information, which provides a rich and flexible feasible solution for the configuration of DTX and/or DRX.

Based on any of the above embodiments, the discontinuous configuration information with the information type of default is discontinuous configuration information corresponding to a minimum DTX identifier or a minimum DRX identifier or a minimum discontinuous configuration information identifier, where the DTX identifier, the DRX identifier and the discontinuous configuration information identifier are used to identify the discontinuous configuration information.

In an embodiment, the discontinuous configuration information may be given with at least one of the DTX identifier, the DRX identifier, or the discontinuous configuration information identifier. For example, in case that the discontinuous configuration information may be used to determine the DTX configuration parameter, the DTX identifier may be set for the discontinuous configuration information. For another example, in case that the discontinuous configuration information may be used to determine the DRX configuration parameter, the DRX identifier may be set for the discontinuous configuration information. For another example, the discontinuous configuration information used to determine the DTX configuration parameter and/or the DRX configuration parameter may be identified together with the discontinuous configuration information identifier, such as partial identifiers with a small discontinuous configuration information identifier are used to determine the DTX configuration parameter, and partial identifiers with a large discontinuous configuration information identifier are used to determine the DRX configuration parameters.

On this basis, discontinuous configuration information with the smallest DTX identifier may be determined as the default discontinuous configuration information; or discontinuous configuration information with the smallest DRX identifier may be determined as the default discontinuous configuration information; or the discontinuous configuration information with the smallest discontinuous configuration information identifier may be determined as the default discontinuous configuration information, which is not limited in the embodiment of the present application.

In addition, the indication information may indicate the validation/invalidation/switching/adjustment of at least one piece of discontinuous configuration information based on at least one of the DTX identifier, the DRX identifier, or the discontinuous configuration information identifier.

Based on any of the above embodiments, in case that multiple pieces of discontinuous configuration information are present, the method further includes:
determining invalid discontinuous configuration information from the multiple pieces of discontinuous configuration information based on fifth indication information; and/or
adjusting the discontinuous configuration information based on sixth indication information;
where the fifth indication information and the sixth indication information belong to the indication information.

In an embodiment, in addition to being used to indicate validation or switching of the discontinuous configuration information, the indication information may also be used to indicate invalidation or adjustment of the discontinuous configuration information.

The fifth indication information is indication information used to indicate invalidation of the discontinuous configuration information. After receiving the fifth indication information, the terminal may determine the discontinuous configuration information indicated by the fifth indication information from multiple pieces of discontinuous configuration information, that is, the fifth indication information indicates the invalid discontinuous configuration information, and the terminal may determine the discontinuous configuration information as the invalid discontinuous configuration information.

The sixth indication information is indication information used to indicate adjustment of the discontinuous configuration information. After receiving the sixth indication information, the terminal may determine the discontinuous configuration information to be adjusted indicated by the sixth indication information from multiple pieces of discontinuous configuration information and adjust the discontinuous configuration information. It may be understood that the discontinuous configuration information is adjusted here, that is, the DTX configuration parameter and/or DRX configuration parameter corresponding to the discontinuous configuration information are adjusted. Taking the adjustment of the DTX configuration parameter as an example, at least one of the following parameters may be adjusted: a DTX cycle, a start position offset of a DTX on or active period, a duration of a DTX on or active period, a start position of a DTX on or active period, an end position of a DTX on or active period, an end position offset of a DTX on or active period, a start position offset of a DTX off or non-active period, a duration of a DTX off or non-active period, a start position of a DTX off or non-active period, an end position of a DTX off or non-active period, or an end position offset of a DTX off or non-active period.

In the method provided by the embodiment of the present application, the invalidation and/or adjustment of the discontinuous configuration information is implemented based on the indication information, and thus the configuration of DTX and/or DRX is more flexible.

Based on any of the above embodiments, the method further includes:
obtaining the indication information based on at least one of the following:
a broadcast message, a multicast message, a radio resource control (RRC) message, a layer 1 (L1) signaling, or a layer 2 (L2) signaling.

In an embodiment, the indication information may be carried in at least one of the following: a broadcast message, a multicast message, a RRC message, an L1 signaling, or an L2 signaling. Furthermore, the indication information received at different times may carry the same type of message or signaling, or may carry different types of messages or signaling, which is not specifically limited in the embodiments of the present application.

The indication information may be scheduling downlink control information (DCI) or non-scheduling DCI, preferably the indication information is non-scheduling DCI. The indication information includes a function field, where the function field is used to indicate at least one of a DTX identifier, a DRX identifier, or a discontinuous configuration information identifier, the function field includes N bits, and the value of N is preferably 2, 3, or 4.

Based on any of the above embodiments, a valid duration of the indication information is configured by a higher layer signaling, or protocol-agreed; the valid duration is a fixed time period or a first given quantity of a DTX or DRX cycle.

In an embodiment, the indication information itself has a valid duration, and different indication information may have the same or different valid durations.

In an embodiment, the valid duration of the indication information may be configured through a higher layer signaling. For example, the new L1/L2 signaling or RRC message may be used to indicate the validation/invalidation/switching/adjustment of the new DTX and/or DRX to determine an end time point of the valid duration.

Alternatively, the valid duration of the indication information may also be agreed through a protocol. For example, a fixed time period may be agreed through a protocol as the valid duration; or, the valid duration may be agreed as M cycles of the DTX/DRX. Here, M is the first given quantity, which is a pre-agreed number value or a number value configured for the network device. The cycle of the DTX/DRX here may be a cycle of DTX and/or DRX configured in the discontinuous configuration information, or, the DTX/DRX cycle may be a cycle of DTX/DRX included in a default DTX and/or DRX configuration parameter.

The method provided in the embodiment of the present application provides two implementations for determining the valid duration of the indication information, namely, higher layer signaling configuration and protocol agreement, which helps to further improve the flexibility of DTX and/or DRX configuration.

Based on any of the above embodiments, the multiple pieces of discontinuous configuration information are applied to a same carrier or BWP, and/or applied to different carriers or BWPs.

For example, in case that two pieces of discontinuous configuration information are present, one piece of discontinuous configuration information is applied to a primary cell (PCell), and the other piece of discontinuous configuration information is applied to a secondary cell (SCell); or, both discontinuous configuration information are applied to the PCell, or both are applied to the SCell, which is not limited in the embodiment of the present application.

For another example, configuration information received at the terminal includes two pieces of discontinuous configuration information, one piece of discontinuous configuration information is applied to the PCell, and the other piece of discontinuous configuration information is applied to the SCell. The configuration information may be transmitted on the PCell, and the specific configuration parameters of the discontinuous configuration information on the PCell and the discontinuous configuration information on the SCell may be different, for example, a period value of the discontinuous configuration information on the PCell is large, and a period value of the discontinuous configuration information on the SCell is small.

For another example, two pieces of configuration information are received at the terminal, at least one piece of discontinuous configuration information included in one configuration information is applied to the first carrier or the PCell, and at least one piece of discontinuous configuration information included in the other configuration information is applied to the second carrier or the SCell.

Based on any of the above embodiments, in case that at least one piece of discontinuous configuration information is present, step 220 includes:
determining all discontinuous configuration information included in the configuration information as valid discontinuous configuration information; and
determining the DTX and/or DRX based on the valid discontinuous configuration information.

In an embodiment, the above embodiment provides a method for determining the DTX and/or DRX based on configuration information in case that multiple pieces of discontinuous configuration information are present at the terminal side. Different from the above embodiments, an embodiment of the present application provides a method for determining the DTX and/or DRX based on configuration information in case that at least one piece of discontinuous configuration information is present at the terminal side. It may be understood that the method for determining the DTX and/or DRX provided in the embodiments of the present application may be applied not only to a case where multiple pieces of discontinuous configuration information are present, but also to a case where only one piece of discontinuous configuration information is present.

In an embodiment, in case that at least one piece of discontinuous configuration information is present, all discontinuous configuration information included in the configuration information may be determined as valid discontinuous configuration information, thereby determining the DTX and/or DRX for the network device. That is, all DTX configuration parameters and/or DRX configuration parameters determined by all received discontinuous configuration information are directly used to determine the DTX and/or DRX for the network device.

For example, the network device broadcasts the configuration information through a broadcast message (system information block, SIB), and the terminal determines that all pieces of discontinuous configuration information included in the configuration information are validated;
for another example, the network device issues the configuration information through a UE-specific RRC signaling, and the terminal determines that all pieces of discontinuous configuration information included in the configuration information are validated; or
the network device issues the configuration information through the L1 signaling, and the terminal determines that all pieces of discontinuous configuration information included in the configuration information are validated; or
the network device issues the configuration information through a multicast message, and the terminal determines that all pieces of discontinuous configuration information included in the configuration information are validated; or
the network device broadcasts configuration information through a L2 signaling, and the terminal determines that all pieces of discontinuous configuration information included in the configuration information are validated.

In the method provided in the embodiment of the present application, the DTX and/or DRX is determined by validating all pieces of discontinuous configuration information to ensures the universality of configuration implementation.

Based on any of the above embodiments, after step 220, the method further includes:
receiving seventh indication information, where the seventh indication information is used to indicate at least one of validation, invalidation or adjustment of discontinuous configuration information corresponding to the DTX and/or DRX.

In an embodiment, after determining the DTX and/or DRX for the network device, the terminal may also implement the validation/failure/switching/adjustment of DTX and/or DRX based on the received seventh indication information. It may be understood that the adjustment of DTX and/or DRX here specifically refers to the adjustment of the discontinuous configuration information corresponding to the DTX and/or DRX.

The seventh indication information here may be a cell specific signaling or a group common specific signaling or a UE-specific signaling, or may be an energy-saving signal. For example, the seventh indication information may be non-scheduling DCI or scheduling DCI. In addition, the function field of the seventh indication information includes at most N bits, and as a preferred embodiment, the value of N is 2, 3, or 4.

Based on any of the above embodiments, in case that the seventh indication information is received in different transmission occasions, functions corresponding to the seventh indication information are different.

In case that the seventh indication information is received within a first transmission occasion, the seventh indication information is used to indicate validation or invalidation of a first DTX among DTXs for the network device and/or a first DRX among DRXs for the network device, or used to adjust discontinuous configuration information corresponding to a first DTX and/or a first DRX, and the first transmission occasion is a second given quantity of time units before a first DTX or first DRX active period; and
in case that the seventh indication information is received within a second transmission occasion, the seventh indication information is used to indicate validation or invalidation of at least one of a first DTX or a second DTX among DTXs for the network device and/or a first DRX or a second DRX among DRXs for the network device, or used to adjust discontinuous configuration information corresponding to at least one of a first DTX, a second DTX, a first DRX or a second DTX, and the second transmission occasion is a first DTX or first DRX active period.

In an embodiment, in case that the DTX and/or DRX for the network device determined based on the configuration information include multiple DTXs and/or DRXs, functions corresponding to the seventh indication information received in different transmission occasions are also different. For ease of description in the following content, different DTXs among the DTXs and/or DRXs among the DRXs for the network device are marked as a first DTX and/or a first DRX, and a second DTX and/or a second DRX. It may be understood that the first DTX and the second DTX are different DTXs, and the first DRX and the second DRX are different DRXs.

In an embodiment, within the second given quantity of time units before the active period of the first DTX or the first DRX, that is, within the first transmission occasion, the terminal receives the seventh indication information, and then validates/invalidates/switches/adjusts the first DTX and/or the first DRX based on the seventh indication information. Here, before the active period is before the start time of the active period. For the DTX and/or DRX, the start time of the active period, i.e., the start time of DTX and/or DRX on is the first transmission occasion may also be understood as the second given quantity of time units before the first DTX or the first DRX is on. The second given quantity here is a given number value, or a number value configured for the network device.

In addition, within the active period of the first DTX or the first DRX, that is, within the second transmission occasion, the terminal receives the seventh indication information, and then then validates/invalidates/switches/adjusts at least one of the first DTX, the first DRX, the second DTX or the second DRX based on the seventh indication information.

Based on any of the above embodiments, the method further includes:
transmitting a configuration request to the network device, where the configuration request is used to request at least one of the following:
validation of discontinuous configuration information;
adjustment of discontinuous configuration information; or
invalidation of discontinuous configuration information.

In an embodiment, the terminal may transmit a configuration request to the network device to feedback or request validation/invalidation/switching/adjustment of at least one piece of discontinuous configuration information. In an embodiment, based on the configuration request, the terminal may feedback or request discontinuous configuration information to the network device.

For example, after determining one or more sets of DTX and/or DRX based on the configuration information, the terminal may transmit a configuration request based on the first uplink signal/channel. The configuration request here may carry configuration parameters of the discontinuous configuration information, or the configuration request may carry a DTX identifier/DRX identifier/discontinuous configuration information identifier corresponding to the discontinuous configuration information.

In the method provided by the embodiment of the present application, the terminal may transmit a configuration request to the network device, thereby making the configuration of DTX and/or DRX more flexible.

Based on any of the above embodiments, transmitting the configuration request to the network device includes:
transmitting the configuration request to the network device in a third transmission occasion, or in a fourth transmission occasion;
where the third transmission occasion is a third given quantity of time units before a first DTX active period among DTXs for the network device or a first DRX among DRXs for the network device, and the fourth transmission occasion is a first DTX or first DRX active period.

In an embodiment, the terminal may transmit a configuration request to the network device in the third transmission occasion or the fourth transmission occasion.

The third transmission occasion here is a third given quantity of time units before a first DTX or a first DRX active period among DTXs or DRXs for the network device. Here, the active period of DTX and/or DRX may also be referred to as DTX and/or DRX on, or as the network device being in a non-energy-saving state. That is, the third transmission occasion here may also be understood as a third given quantity of time units before the first DTX or the first DRX is on. The third given quantity here is a given number value, or a number value configured for the network device.

The fourth transmission occasion here is a first DTX or first DRX active period.

Based on any of the above embodiments, in case that at least one configuration information is present, step 210 includes:
obtaining the configuration information based on at least one of the following: a broadcast message, a multicast message, a radio resource control (RRC) message, a layer 1 (L1) signaling, or a layer 2 (L2) signaling.

In an embodiment, at least one piece of configuration information may be present at the terminal side, that is, the terminal may receive one or more pieces of configuration information. The configuration information may be carried in at least one of the following: a broadcast message, a multicast message, a RRC message, an L1 signaling, or an L2 signaling. Furthermore, the configuration information received at different times may carry the same type of message or signaling, or may carry different types of messages or signaling, which is not specifically limited in the embodiments of the present application.

For example, the network device transmits the first configuration information through broadcast information and transmits the second configuration information through UE-specific RRC signaling/L1 signaling/L2 signaling;
for another example, the network device transmits the first configuration information through UE-specific RRC and transmits the second configuration information through L1 signaling.; here, the first configuration information and the second configuration information are different pieces of configuration information.

Based on any of the above embodiments, the discontinuous configuration information is type-configurable configuration information, and the type-configurable configuration information is DTX configuration information and/or DRX configuration information determined based on eighth indication information;
where the DTX configuration information and/or the DRX configuration information is used to determine the DTX configuration parameter and/or the DRX configuration parameter.

In an embodiment, the discontinuous configuration information may be type-configurable configuration information, where the type-configurable configuration information is flexible configuration information, and the configurable type may include DTX configuration information and/or DRX configuration information.

For the type-configurable configuration information, the received eighth indication information may be used to determine whether the type-configurable configuration information is specifically DTX configuration information for determining the DTX configuration parameter and/or DRX configuration information for determining DRX configuration parameter. Here, the eighth indication information may be carried in L 1 signaling/L2 signaling/RRC message, etc.

As an example, the parameter included in the type-configurable configuration information may be consistent with the parameter included in the other types of fixed discontinuous configuration information. The difference between the two is that the type-configurable configuration information is specifically used to determine DTX configuration parameters and/or DRX configuration parameters, which is flexible and needs to be implemented based on the eighth indication information.

As an example, the type-configurable configuration information may be a broadcast message SIB.

In the method provided by the embodiment of the present application, the setting of the discontinuous configuration information is more flexible and richer by setting the type-configurable configuration information as one of the discontinuous configuration information, which is conducive to ensuring the flexibility of DTX and/or DRX configuration.

Based on any of the above embodiments, the discontinuous configuration information includes generic configuration parameters, and the generic configuration parameters are used to determine the DTX configuration parameter and the DRX configuration parameter.

Here, the generic configuration parameters are a set of common parameters that may be used to determine both the DTX configuration parameter and the DRX configuration parameter. It may be understood that the DTX and DRX at the network device side may be determined by the same configuration parameter, that is, the DTX configuration parameter and the DRX configuration parameter may be determined together by a set of generic configuration parameters.

Further, the DTX configuration parameter and DRX configuration parameter may be determined by the following generic configuration parameters:
a DTX and DRX cycle, a start position offset of a DTX and DRX on or active period, a duration of a DTX and DRX on or active period, a start position of a DTX and DRX on or active period, an end position of a DTX and DRX on or active period, an end position offset of a DTX and DRX on or active period, a start position offset of a DTX and DRX off or non-active period, a duration of a DTX and DRX off or non-active period, a start position of a DTX and DRX off or non-active period, an end position of a DTX and DRX off or non-active period, or an end position offset of a DTX and DRX off or non-active period.

Based on any of the above embodiments, the discontinuous configuration information includes the DTX configuration parameter, and the DTX configuration parameter is used to determine the DTX configuration parameter; in case that the discontinuous configuration information does not include the DRX configuration parameter, the DTX configuration parameter is further used to determine the DRX configuration parameter; and
the discontinuous configuration information includes the DRX configuration parameter, and the DRX configuration parameter is used to determine the DRX configuration parameter; in case that the discontinuous configuration information does not include the DTX configuration parameter, the DRX configuration parameter is further used to determine the DTX configuration parameter.

In an embodiment, the discontinuous configuration information may include the DTX configuration parameter, and in case that the discontinuous configuration information includes the DTX configuration parameter but does not include the DRX configuration parameter, that is, in case that the discontinuous configuration information includes the DTX configuration parameter but does not configure the DRX configuration parameter separately, the terminal may determine the DRX configuration parameter not included in the discontinuous configuration information based on the DTX configuration parameter included in the discontinuous configuration information.

In addition, the discontinuous configuration information may include the DRX configuration parameter, and in case that the discontinuous configuration information includes the DRX configuration parameter but does not include the DTX configuration parameter, that is, in case that the discontinuous configuration information includes the DRX configuration parameter but does not configure the DTX configuration parameter separately, the terminal may determine the DTX configuration parameter not included in the discontinuous configuration information based on the DRX configuration parameter included in the discontinuous configuration information.

In addition, the discontinuous configuration information may include both the DTX configuration parameter and the DRX configuration parameter, that is, the discontinuous configuration information may independently configure the DTX configuration parameter and the DRX configuration parameter.

Based on any of the above embodiments, the discontinuous configuration information includes at least one of a common parameter, a DTX partial parameter, or a DRX partial parameter, where the common parameter and the DTX partial parameter are used to determine the DTX configuration parameter, and the common parameter and the DRX partial parameter are used to determine the DRX configuration parameter.

In an embodiment, the common parameter is used to configure the parameter common to DTX and DRX, the DTX partial parameter is a partial parameter required to configure DTX other than the common parameter, and the DRX partial parameter is a partial parameter required to configure DRX other than the common parameter.

For a single piece of discontinuous configuration information, in case that the discontinuous configuration information includes the common parameter and the DTX partial parameter, the DTX configuration parameter may be determined based on the common parameter and the DTX partial parameter. In case that the discontinuous configuration information includes the common parameter and the DRX partial parameter, the DRX configuration parameter may be determined based on the common parameter and the DRX partial parameter. In case that the discontinuous configuration information includes the common parameter, the DTX partial parameter and the DRX partial parameter, the DTX configuration parameter may be determined based on the common parameter and the DTX partial parameter, and the DRX configuration parameter may be determined based on the common parameter and DRX partial parameter.

In addition, for the case that multiple pieces of discontinuous configuration information are present and it is assumed that three pieces of discontinuous configuration information include the common parameter, the DTX partial parameter and the DRX partial parameter respectively, it is necessary to determine a set of DTX configuration parameters and DRX configuration parameters in combination with the three pieces of discontinuous configuration information. It is assumed that one piece of discontinuous configuration information includes two of the common parameter, the DTX partial parameter and the DRX partial parameter, and another discontinuous configuration information includes another of the common parameter, the DTX partial parameter and the DRX partial parameter, a set of DTX configuration parameters and DRX configuration parameters may be determined in combination with the two pieces of discontinuous configuration information. A manner of determining the DTX configuration parameter and/or DRX configuration parameters based on the combination of the common parameter, the DTX partial parameter and the DRX partial parameter in case that multiple pieces of discontinuous configuration information are present is not limited in the embodiment of the present application.

For example, the discontinuous configuration information included in one configuration information may include common parameters, and the discontinuous configuration information included in another configuration information may include the DTX partial parameter and/or DRX partial parameter. For example, the discontinuous configuration information included in the configuration information broadcast by the SIB includes the common parameter, and the discontinuous configuration information included in the configuration information configured by the RRC message includes the DTX partial parameter and/or the DRX partial parameter.

Further, the common parameter may include at least one of the following:
a DTX and DRX cycle, a start position offset of a DTX and DRX on or active period, a duration of a DTX and DRX on or active period, a start position of a DTX and DRX on or active period, an end position of a DTX and DRX on or active period, an end position offset of a DTX and DRX on or active period, a start position offset of a DTX and DRX off or non-active period, a duration of a DTX and DRX off or non-active period, a start position of a DTX and DRX off or non-active period, an end position of a DTX and DRX off or non-active period, or an end position offset of a DTX and DRX off or non-active period; and
the DTX partial parameter may include at least one of the following:
   a DRX cycle, a start position offset of a DRX on or active period, a duration of a DRX on or active period, a start position of a DRX on or active period, an end position of a DRX on or active period, an end position offset of a DRX on or active period, a start position offset of a DRX off or non-active period, a duration of a DRX off or non-active period, a start position of a DRX off or non-active period, an end position of a DRX off or non-active period, or an end position offset of a DRX off or non-active period;
   the DRX partial parameter may include at least one of the following:
      a DRX cycle, a start position offset of a DRX on or active period, a duration of a DRX on or active period, a start position of a DRX on or active period, an end position of a DRX on or active period, an end position offset of a DRX on or active period, a start position offset of a DRX off or non-active period, a duration of a DRX off or non-active period, a start position of a DRX off or non-active period, an end position of a DRX off or non-active period, or an end position offset of a DRX off or non-active period.

For example, the common parameter is the DTX/DRX cycle; the DTX partial parameters are a start position offset of a DTX on or active period, a duration of a DTX on or active period; and the DRX partial parameters are a start position offset of a DRX on or active period, a duration of a DRX on or active period.

Based on any of the above embodiments, the DTX configuration parameter includes at least one of the following:
a DTX cycle, a start position offset of a DTX on or active period, a duration of a DTX on or active period, a start position of a DTX on or active period, an end position of a DTX on or active period, an end position offset of a DTX on or active period, a start position offset of a DTX off or non-active period, a duration of a DTX off or non-active period, a start position of a DTX off or non-active period, an end position of a DTX off or non-active period, or an end position offset of a DTX off or non-active period; and
the DRX configuration parameter includes at least one of the following:
   a DRX cycle, a start position offset of a DRX on or active period, a duration of a DRX on or active period, a start position of a DRX on or active period, an end position of a DRX on or active period, an end position offset of a DRX on or active period, a start position offset of a DRX off or non-active period, a duration of a DRX off or non-active period, a start position of a DRX off or non-active period, an end position of a DRX off or non-active period, or an end position offset of a DRX off or non-active period.

In an embodiment, the duration of the DRX on or active period is longer than the duration of the DTX on or active period or the duration of the DRX on or active period is shorter than the duration of the DTX on or active period.

Based on any of the above embodiments, the DTX cycle or the DRX cycle includes a duration of at least one DTX or DRX on or active period.

In an embodiment, in case that multiple DTXs and/or DRXs are present for the network device, the DTX cycle or the DRX cycle includes a duration of at least one DTX or DRX on or active period. In this case, the DTX configuration parameter includes at least one of a start position offset of a DTX on or active period, a duration of a DTX on or active period, a start position of a DTX on or active period, an end position of a DTX on or active period, an end position offset of a DTX on or active period, a start position offset of a DTX off or non-active period, an duration of a DTX off or non-active period, a start position of a DTX off or non-active period, an end position of a DTX off or non-active period, or an end position offset of a DTX off or non-active period and a quantity of the DTX configuration parameter may be at least one;
in addition, the DRX configuration parameter includes at least one of a DRX cycle, a start position offset of a DRX on or active period, a duration of a DRX on or active period, a start position of a DRX on or active period, an end position of a DRX on or active period, an end position offset of a DRX on or active period, a start position offset of a DRX off or non-active period, a duration of a DRX off or non-active period, a start position of a DRX off or non-active period, an end position of a DRX off or non-active period and an end position of a DRX off or non-active period and a quantity of the DRX configuration parameter may be at least one.

It may be understood that the active period of DTX and/or DRX may also be referred to as DTX and/or DRX on, or as the network device being in a non-energy-saving state. Correspondingly, the non-active period of DTX and/or DRX may also be referred to as DTX and/or DRX off, or as the network device being in an energy-saving state.

In an embodiment, according to the configuration method of the present application, the DTX and DRX include a first DTX, a first DRX, a second DTX, and a second DRX;
a first DTX non-active period includes at least one second DTX active period and/or at least one second DRX active period; and/or
a first DRX non-active period includes at least one second DTX active period and/or at least one second DRX active period.

In an embodiment, in case that the DTX and/or DRX for the network device determined based on the configuration information include multiple DTXs and/or DRXs, functions corresponding to the seventh indication information received in different transmission occasions are also different. For ease of description in the following content, different DTXs among the DTXs and/or DRXs among the DRXs for the network device are marked as a first DTX and/or a first DRX, and a second DTX and/or a second DRX. It may be understood that the first DTX and the second DTX are different DTXs, and the first DRX and the second DRX are different DRXs.

A first DTX non-active period includes at least one second DTX active period and/or at least one second DRX active period. In addition, a first DRX non-active period includes at least one second DTX active period and/or at least one second DRX active period. In an embodiment, during implementation, the terminal may first determine an end time of a first DTX on or active period, or determine a start time of a first DTX off or non-active period; a start time of at least one second DTX on or active period and/or a start time of at least one second DRX on or active period may be determined based on the end time of the first DTX on or active period, or the start time of the first DTX off or non-active period.

It may be understood that the end time of the first DTX on or active period, or the start time of the first DTX off or non-active period may be determined based on at least one of the following DTX configuration parameters determined based on the discontinuous configuration information: a first DTX cycle, a start position offset of the first DTX on or active period, a duration of the first DTX on or active period, or a start position offset of the first DTX off or non-active period.

In addition, the DTX configuration parameter further includes at least one of the following: an offset of a start time of a second DTX on or active period relative to the end time of the first DTX on or active period or the start time of the first DTX off or non-active period, a duration of a second DTX on or active period, an offset of a start time of an second DRX on or active period relative to the end time of the first DTX on or active period or the start time of the first DTX off or non-active period, or a duration of a second DRX on or active period.

For example, FIG. 3 is a schematic diagram of DTX/DRX according to an embodiment of the present application. As shown in FIG. 3, the first DTX on or active period may be represented as the first DTX on, the first DTX off or non-active period may be represented as the first DTX off, a slash filling area refers to the second DRX on or active period, which may be represented as the second DRX on, and a checkered filling area refers to the second DTX on or active period, which may be represented as the second DTX on.

In addition, a first DRX non-active period includes at least one second DTX active period and/or at least one second DRX active period. In an embodiment, during implementation, the terminal may first determine the end time of a first DRX on or active period, or determine a start time of a first DRX off or non-active period in a first DRX cycle; a start time of at least one second DRX on or active period and/or a start time of at least one second DTX on or active period may be determined based on the end time of the first DRX on or active period, or the start time of the first DRX off or non-active period.

It may be understood that the end time of the first DRX on or active period, or the start time of the first DRX off or non-active period in the first DRX cycle may be determined based on at least one of the following DRX configuration parameters determined based on the discontinuous configuration information: the first DRX cycle, a start position offset of the first DRX on or active period, a duration of the first DRX on or active period, and a start position offset of the first DRX off or non-active period.

In addition, the DRX configuration parameter further includes at least one of the following: an offset of a start time of a second DRX on or active period relative to the end time of the first DRX on or active period or the start time of the first DRX off or non-active period, a duration of the second DRX on or active period, an offset of a start time of the second DTX on or active period relative to the end time of the first DRX on or active period or the start time of the first DRX off or non-active period, or a duration of the second DTX on or active period.

Based on any one of the above embodiments, FIG. 4 is a second schematic flowchart of a configuration method according to an embodiment of the present application. As shown in FIG. 4, the method may be performed by a network device, and the method includes:
step 410: determining configuration information, where the configuration information includes at least one piece of discontinuous configuration information, the discontinuous configuration information is used to determine a DTX configuration parameter and/or a DRX configuration parameter; and
step 420: transmitting the configuration information to a terminal.

Here, the configuration information may be determined by the network device and transmitted to the terminal. Accordingly, the terminal may receive the configuration information and apply the configuration information to determine the DTX and/or DRX for the network device. It may be understood that the operation of transmitting the configuration information here may be performed once or multiple times at the terminal, that is, the configuration information transmitted from the network device may be one or more pieces and accordingly the configuration information received at the terminal may be one or more pieces.

For single piece of configuration information, or each piece of configuration information in multiple pieces of configuration information, the configuration information includes at least one piece of discontinuous configuration information.

Here, the discontinuous configuration information may be used to determine the DTX configuration parameter and/or the DRX configuration parameter. It may be understood that the DTX configuration parameter is used to implement the DTX configuration for the network device, and the DRX configuration parameter is used to implement the DRX configuration for the network device. The discontinuous configuration information may directly include the DTX configuration parameter and/or the DRX configuration parameter, and may also include associated parameters for determining the DTX configuration parameter and/or the DRX configuration parameter. The embodiment of the present application does not specifically limit this. Here, the DTX configuration parameter may be used to determine a DTX on or active period for the network device, and a DTX off or non-active period for the network device. The DRX configuration parameter may be used to determine a DRX on or active period for the network device, and a DRX off or non-active period for the network device. Here, the on or active period of the DTX for the network device may be also referred to as a DTX non-energy-saving state or period for the network device, or a first period of the DTX for the network device. The present application does not limit the name of the DTX on or active period. The DTX off or non-active period for the network device may be also referred to as a DTX energy-saving state or period for the network device, or a second period of the DTX for the network device. The name of the DTX on or active period is not limited in the present application. The DRX on or active period for the network device may be also referred to as a DRX non-energy-saving state or period for the network device, or a first period of the DRX for the network device. The present application does not limit the name of the DRX on or active period. The DRX off or non-active period for the network device may be also referred to as a DRX energy-saving state or period for the network device, or a second period of the DRX for the network device. The name of the DRX on or active period is not limited in the present application. The network device transmits a control signaling, data, a signal, etc. in the DTX on or active period or the non-energy-saving period or the first period. The network device does not perform data scheduling in the DTX off or non-active period or the energy-saving period or the second period. That is, the network device does not transmit control signaling to dynamically schedule uplink data and/or downlink data, and does not transmit downlink data dynamically scheduled by the control signaling. The network device receives data, a signal, etc. in the DRX on or active period or the non-energy-saving period or the first period. The network device does not perform data scheduling in the DRX off or non-active period or the energy-saving period or the second period. That is, the network device does not receive uplink data dynamically scheduled by a control signaling.

Therefore, in case that after the network device transmits one or more pieces of configuration information, the terminal may receive one or more pieces of configuration information, and one piece of configuration information includes at least one piece of discontinuous configuration information, a terminal side has at least one piece of discontinuous configuration information that may be used to determine the DTX configuration parameter and/or DRX configuration parameter. Based on this, the terminal may determine the DTX and/or DRX for the network device. It may be understood that the DTX and/or DRX for the network device determined here may be one set or multiple sets.

Furthermore, in the procedure of determining the DTX and/or DRX for the network device based on the received configuration information, the terminal may determine each piece of discontinuous configuration information received as the valid discontinuous configuration information, and use a DTX configuration parameter and/or a DRX configuration parameter determined from each piece of discontinuous configuration information to determine the corresponding DTX and/or DRX. The terminal may also select default discontinuous configuration information from each piece of discontinuous configuration information received as the valid discontinuous configuration information, and use a DTX configuration parameter and/or a DRX configuration parameter determined from the valid discontinuous configuration information to determine the corresponding DTX and/or DRX. The terminal may also determine the valid discontinuous configuration information from each piece of discontinuous configuration information received based on instruction of the network device, and use a DTX configuration parameter and/or a DRX configuration parameter determined from the valid discontinuous configuration information to determine the corresponding DTX and/or DRX, which is not specifically limited in the embodiments of the present application.

In the configuration method provided by the embodiment of the present application, the terminal may determine at least one set of DTX and/or DRX for the network device through transmitting at least one piece of discontinuous configuration information to implement at least one set of generic configuration schemes for DTX and/or DRX, which may improve the configuration efficiency and configuration flexibility of DTX and/or DRX. As such, the network device may be in a sleep state during the DTX off or non-active period, or the DRX off or non-active period, thereby ensuring the energy saving effect of the network device.

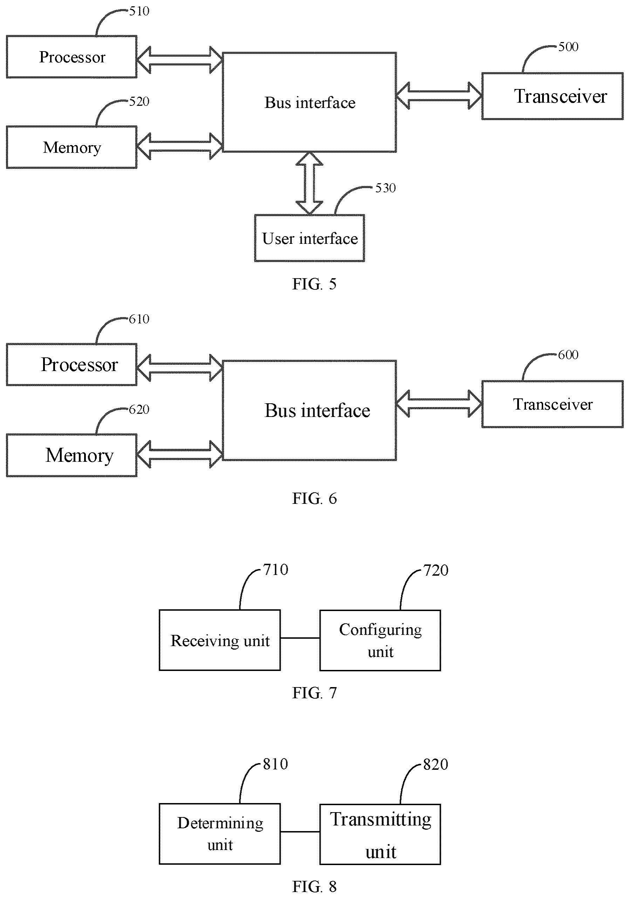

Based on any one of embodiments above, FIG. 5 is a schematic structural diagram of a terminal according to an embodiment of the present application. As shown in FIG. 5, the terminal includes a memory 520, a transceiver 500 and a processor 510.

The memory 520 is used for storing a computer program; the transceiver 500 is used for receiving and transmitting data under control of the processor; the processor 510 is used for reading the computer program in the memory 520 and performing the following operations:
receiving configuration information, where the configuration information includes at least one piece of discontinuous configuration information, the discontinuous configuration information is used to determine a DTX configuration parameter and/or a DRX configuration parameter; and
determining DTX and/or DRX for a network device based on the configuration information.

The transceiver 500 is used to receive and transmit data under control of the processor 510.

In FIG. 5, a bus architecture may include any number of interconnected buses and bridges, which are linked together through various circuits of one or more processors represented by processor 510 and one or more memories represented by the memory 520. The bus architecture may also link together various other circuits, such as peripherals, voltage regulators, and power management circuits, which are well known in the art, and therefore will not be further described in the present application. The bus interface provides an interface. The transceiver 500 may be multiple elements, i.e., including a transmitter and a receiver, units for providing communication with various other devices over transmission media including wireless channels, wired channels, fiber optic cables, and the like. For different user equipment, a user interface 530 may be an interface capable of externally or internally connecting the required device, and the connected device includes, but not limited to, a keypad, a display, a speaker, a microphone, a joystick, and the like.

The processor 510 is responsible for managing the bus architecture and general processing, and the memory 520 may store data used by the processor 510 when performing operations.

In an embodiment, the processor 510 may be a central processing unit (CPU), an application specific integrated circuit (ASIC), a field-programmable gate array (FPGA), or a complex programmable logic device (CPLD), the processor may also use a multi-core architecture.

The processor is configured to perform any one of the methods of the embodiments of the present application based on an obtained executable instruction by calling the computer program stored in the memory. The processor and memory may also be physically separated.

In an embodiment, in case that multiple pieces of discontinuous configuration information are present, determining the DTX and/or DRX for the network device based on the configuration information includes:
determining a piece of valid discontinuous configuration information from the multiple pieces of discontinuous configuration information; and
determining the DTX and/or DRX based on the valid discontinuous configuration information.

In an embodiment, determining the valid discontinuous configuration information from the multiple pieces of discontinuous configuration information includes:
determining the valid discontinuous configuration information from the multiple pieces of discontinuous configuration information based on indication information, at least one of an information type or a priority of the multiple pieces of discontinuous configuration information.

In an embodiment, determining the valid discontinuous configuration information from the multiple pieces of discontinuous configuration information based on the indication information includes:
determining the valid discontinuous configuration information from the multiple pieces of discontinuous configuration information based on first indication information; and/or
determining a piece of invalid discontinuous configuration information and the valid discontinuous configuration information from the multiple pieces of discontinuous configuration information based on second indication information;
where the first indication information and the second indication information belong to the indication information.

In an embodiment, determining the valid discontinuous configuration information from the multiple pieces of discontinuous configuration information based on at least one of the information type or the priority of the multiple pieces of discontinuous configuration information includes:
determining discontinuous configuration information with the information type of default as the valid discontinuous configuration information from the multiple pieces of discontinuous configuration information; and/or
determining discontinuous configuration information with the priority of first priority as the valid discontinuous configuration information from the multiple pieces of discontinuous configuration information.

In an embodiment, in case that the multiple pieces of discontinuous configuration information include at least one piece of discontinuous configuration information with the information type of default and/or at least one piece of discontinuous configuration information with the priority of first priority, determining the valid discontinuous configuration information from the multiple pieces of discontinuous configuration information based on the indication information, at least one of the information type or the priority of the multiple pieces of discontinuous configuration information includes:
determining the valid discontinuous configuration information from the multiple pieces of discontinuous configuration information or from discontinuous configuration information with the information type of candidate and/or discontinuous configuration information with the priority of second priority based on third indication information; and/or
determining the valid discontinuous configuration information and invalid discontinuous configuration information from the multiple pieces of discontinuous configuration information or from discontinuous configuration information with the information type of candidate and/or discontinuous configuration information with the priority of second priority based on fourth indication information;
where the third indication information and the fourth indication information belong to the indication information.

In an embodiment, the discontinuous configuration information with the information type of default is discontinuous configuration information corresponding to a minimum DTX identifier or a minimum DRX identifier or a minimum discontinuous configuration information identifier, where the DTX identifier, the DRX identifier and the discontinuous configuration information identifier are used to identify the discontinuous configuration information.

In an embodiment, the operations further include:
determining invalid discontinuous configuration information from the multiple pieces of discontinuous configuration information based on fifth indication information; and/or
adjusting the discontinuous configuration information based on sixth indication information;
where the fifth indication information and the sixth indication information belong to the indication information.

In an embodiment, the operations further include:
obtaining the indication information based on at least one of the following:
a broadcast message, a multicast message, a radio resource control (RRC) message, a layer 1 (L1) signaling, or a layer 2 (L2) signaling.

In an embodiment, a valid duration of the indication information is configured by a higher layer signaling, or protocol-agreed; the valid duration is a fixed time period or a first given quantity of a DTX or DRX cycle.

In an embodiment, the multiple pieces of discontinuous configuration information are applied to a same carrier or bandwidth partial (BWP), and/or applied to different carriers or BWPs.

In an embodiment, determining the DTX and/or DRX for the network device based on the configuration information includes:
determining all discontinuous configuration information included in the configuration information as valid discontinuous configuration information; and
determining the DTX and/or DRX based on the valid discontinuous configuration information.

In an embodiment, after determining the DTX and/or DRX for the network device based on the configuration information, the method further includes:
receiving seventh indication information, where the seventh indication information is used to indicate at least one of validation, invalidation or adjustment of discontinuous configuration information corresponding to the DTX and/or DRX.

In an embodiment, in case that the seventh indication information is received within a first transmission occasion, the seventh indication information is used to indicate validation or invalidation of a first DTX among DTXs for the network device and/or a first DRX among DRXs for the network device, or used to adjust discontinuous configuration information corresponding to a first DTX and/or a first DRX, and the first transmission occasion is a second given quantity of time units before a first DTX or first DRX active period; and
in case that the seventh indication information is received within a second transmission occasion, the seventh indication information is used to indicate validation or invalidation of at least one of a first DTX or a second DTX among DTXs for the network device and/or a first DRX or a second DRX among DRXs for the network device, or used to adjust discontinuous configuration information corresponding to at least one of a first DTX, a second DTX, a first DRX or a second DTX, and the second transmission occasion is a first DTX or first DRX active period.

In an embodiment, the operations further include:
transmitting a configuration request to the network device, where the configuration request is used to request at least one of the following:
validation of discontinuous configuration information;
adjustment of discontinuous configuration information; or
invalidation of discontinuous configuration information.

In an embodiment, transmitting the configuration request to the network device includes:
transmitting the configuration request to the network device in a third transmission occasion, or in a fourth transmission occasion;
where the third transmission occasion is a third given quantity of time units before a first DTX active period among DTXs for the network device or a first DRX among DRXs for the network device, and the fourth transmission occasion is a first DTX or first DRX active period.

In an embodiment, in case that at least one piece of configuration information is present, the operations further include:
obtaining the configuration information based on at least one of the following: a broadcast message, a multicast message, a radio resource control (RRC) message, a layer 1 (L1) signaling, or a layer 2 (L2) signaling.

In an embodiment, the discontinuous configuration information is type-configurable configuration information, and the type-configurable configuration information is DTX configuration information and/or DRX configuration information determined based on eighth indication information;
where the DTX configuration information and/or the DRX configuration information is used to determine the DTX configuration parameter and/or the DRX configuration parameter.

In an embodiment, the discontinuous configuration information includes generic configuration parameters, and the generic configuration parameters are used to determine the DTX configuration parameter and the DRX configuration parameter; or
the discontinuous configuration information includes the DTX configuration parameter, and the DTX configuration parameter is used to determine the DTX configuration parameter; in case that the discontinuous configuration information does not include the DRX configuration parameter, the DTX configuration parameter is further used to determine the DRX configuration parameter; and
the discontinuous configuration information includes the DRX configuration parameter, and the DRX configuration parameter is used to determine the DRX configuration parameter; in case that the discontinuous configuration information does not include the DTX configuration parameter, the DRX configuration parameter is further used to determine the DTX configuration parameter; or
the discontinuous configuration information includes at least one of a common parameter, a DTX partial parameter, or a DRX partial parameter, where the common parameter and the DTX partial parameter are used to determine the DTX configuration parameter, and the common parameter and the DRX partial parameter are used to determine the DRX configuration parameter.

In an embodiment, the DTX configuration parameter includes at least one of the following:
a DTX cycle, a start position offset of a DTX on or active period, a duration of a DTX on or active period, a start position of a DTX on or active period, an end position of a DTX on or active period, an end position offset of a DTX on or active period, a start position offset of a DTX off or non-active period, a duration of a DTX off or non-active period, a start position of a DTX off or non-active period, an end position of a DTX off or non-active period, or an end position offset of a DTX off or non-active period; and
the DRX configuration parameter includes at least one of the following:
   a DRX cycle, a start position offset of a DRX on or active period, a duration of a DRX on or active period, a start position of a DRX on or active period, an end position of a DRX on or active period, an end position offset of a DRX on or active period, a start position offset of a DRX off or non-active period, a duration of a DRX off or non-active period, a start position of a DRX off or non-active period, an end position of a DRX off or non-active period, or an end position offset of a DRX off or non-active period.

In an embodiment, the DTX cycle or the DRX cycle includes a duration of at least one DTX or DRX on or active period.

In an embodiment, the DTX and DRX include a first DTX, a first DRX, a second DTX, and a second DRX;
a first DTX non-active period includes at least one second DTX active period and/or at least one second DRX active period; and/or
a first DRX non-active period includes at least one second DTX active period and/or at least one second DRX active period.

It should be noted here that the above-mentioned terminal according to the embodiments of the present application may implement all the method steps implemented by the above-mentioned method embodiments performed by the terminal, and may achieve the same effect. The same parts and beneficial effects as the same method embodiments is not repeated in the present application.

FIG. 6 is a schematic structural diagram of a network device according to an embodiment of the present application. As shown in FIG. 6, the network device includes a memory 620, a transceiver 600, and a processor 610.

The memory 620 is used for storing a computer program; the transceiver 600 is used for transmitting and receiving data under control of the processor; the processor 610 is used for reading the computer program in the memory and performing the following operations of:
determining configuration information, where the configuration information includes at least one piece of discontinuous configuration information, the discontinuous configuration information is used to determine a DTX configuration parameter and/or a DRX configuration parameter; and
transmitting the configuration information to a terminal.

In FIG. 6, a bus architecture may include any number of interconnected buses and bridges, which are linked together through various circuits of one or more processors represented by processor 610 and one or more memories represented by the memory 620. The bus architecture may also link together various other circuits, such as peripherals, voltage regulators, and power management circuits, which are well known in the art, and therefore will not be further described in the present application. The bus interface provides an interface. The transceiver 600 may be multiple elements, i.e., including a transmitter and a receiver, units for providing communication with various other devices over transmission media including wireless channels, wired channels, fiber optic cables, and the like.

The processor 610 is responsible for managing the bus architecture and general processing, and the memory 620 may store data used by the processor 610 when performing operations.

In an embodiment, the processor 610 may be a central processing unit (CPU), an application specific integrated circuit (ASIC), a field-programmable gate array (FPGA), or a complex programmable logic device (CPLD), the processor may also use a multi-core architecture.

The processor is configured to perform any one of the methods of the embodiments of the present application based on an obtained executable instruction by calling the computer program stored in the memory. The processor and memory may also be physically separated.

It should be noted here that the above-mentioned network device according to the embodiments of the present application may implement all the method steps implemented by the above-mentioned method embodiments performed by the network device, and may achieve the same effect. The same parts and beneficial effects as the same method embodiments are not repeated here.

FIG. 7 is a first schematic structural diagram of a configuration apparatus according to an embodiment of the present application. As shown in FIG. 7, the configuration apparatus includes:
a receiving unit 710, used for receiving configuration information, where the configuration information includes at least one piece of discontinuous configuration information, the discontinuous configuration information is used to determine a DTX configuration parameter and/or a DRX configuration parameter; and
a configuring unit 720, used for determining DTX and/or DRX for a network device based on the configuration information.

In an embodiment, in case that multiple pieces of discontinuous configuration information are present, the configuration unit includes:
a selecting subunit, used for determining a piece of valid discontinuous configuration information from the multiple pieces of discontinuous configuration information; and
a configuring subunit, used for determining the DTX and/or DRX based on the valid discontinuous configuration information.

In an embodiment, the selecting subunit is used for:
determining the valid discontinuous configuration information from the multiple pieces of discontinuous configuration information based on indication information, at least one of an information type or a priority of the multiple pieces of discontinuous configuration information.

In an embodiment, the selection subunit is used for:
determining the valid discontinuous configuration information from the multiple pieces of discontinuous configuration information based on first indication information; and/or
determining a piece of invalid discontinuous configuration information and the valid discontinuous configuration information from the multiple pieces of discontinuous configuration information based on second indication information;
where the first indication information and the second indication information belong to the indication information.

In an embodiment, the selection subunit is used for:
determining discontinuous configuration information with the information type of default as the valid discontinuous configuration information from the multiple pieces of discontinuous configuration information; and/or
determining discontinuous configuration information with the priority of first priority as the valid discontinuous configuration information from the multiple pieces of discontinuous configuration information.

In an embodiment, in case that the multiple pieces of discontinuous configuration information include at least one piece of discontinuous configuration information with the information type of default and/or at least one piece of discontinuous configuration information with the priority of first priority, the selecting subunit is used for:
determining the valid discontinuous configuration information from the multiple pieces of discontinuous configuration information or from discontinuous configuration information with the information type of candidate and/or discontinuous configuration information with the priority of second priority based on third indication information; and/or
determining the valid discontinuous configuration information and invalid discontinuous configuration information from the multiple pieces of discontinuous configuration information or from discontinuous configuration information with the information type of candidate and/or discontinuous configuration information with the priority of second priority based on fourth indication information;
where the third indication information and the fourth indication information belong to the indication information.

In an embodiment, the discontinuous configuration information with the information type of default is discontinuous configuration information corresponding to a minimum DTX identifier or a minimum DRX identifier or a minimum discontinuous configuration information identifier, where the DTX identifier, the DRX identifier and the discontinuous configuration information identifier are used to identify the discontinuous configuration information.

In an embodiment, the configuration unit is further used for:
determining invalid discontinuous configuration information from the multiple pieces of discontinuous configuration information based on fifth indication information; and/or
adjusting the discontinuous configuration information based on sixth indication information;
where the fifth indication information and the sixth indication information belong to the indication information.

In an embodiment, the receiving unit is further used for:
obtaining the indication information based on at least one of the following:
a broadcast message, a multicast message, a radio resource control (RRC) message, a layer 1 (L1) signaling, or a layer 2 (L2) signaling.

In an embodiment, a valid duration of the indication information is configured by a higher layer signaling, or protocol-agreed; the valid duration is a fixed time period or a first given quantity of a DTX or DRX cycle.

In an embodiment, the multiple pieces of discontinuous configuration information are applied to a same carrier or bandwidth partial (BWP), and/or applied to different carriers or BWPs.

In an embodiment, the configuration unit is used for:
determining all discontinuous configuration information included in the configuration information as valid discontinuous configuration information; and
determining the DTX and/or DRX based on the valid discontinuous configuration information.

In an embodiment, the apparatus further includes an adjusting unit, used for:
receiving seventh indication information, where the seventh indication information is used to indicate at least one of validation, invalidation or adjustment of discontinuous configuration information corresponding to the DTX and/or DRX.

In an embodiment, in case that the seventh indication information is received within a first transmission occasion, the seventh indication information is used to indicate validation or invalidation of a first DTX among DTXs for the network device and/or a first DRX among DRXs for the network device, or used to adjust discontinuous configuration information corresponding to a first DTX and/or a first DRX, and the first transmission occasion is a second given quantity of time units before a first DTX or first DRX active period; and
in case that the seventh indication information is received within a second transmission occasion, the seventh indication information is used to indicate validation or invalidation of at least one of a first DTX or a second DTX among DTXs for the network device and/or a first DRX or a second DRX among DRXs for the network device, or used to adjust discontinuous configuration information corresponding to at least one of a first DTX, a second DTX, a first DRX or a second DTX, and the second transmission occasion is a first DTX or first DRX active period.

In an embodiment, the apparatus further includes a requesting unit, used for:
transmitting a configuration request to the network device, where the configuration request is used to request at least one of the following:
validation of discontinuous configuration information;
adjustment of discontinuous configuration information; or
invalidation of discontinuous configuration information.

In an embodiment, the requesting unit is used for:
transmitting the configuration request to the network device in a third transmission occasion, or in a fourth transmission occasion;
where the third transmission occasion is a third given quantity of time units before a first DTX active period among DTXs for the network device or a first DRX among DRXs for the network device, and the fourth transmission occasion is a first DTX or first DRX active period.

In an embodiment, in case that at least one piece of configuration information is present, the receiving unit is used for:
obtaining the configuration information based on at least one of the following: a broadcast message, a multicast message, a radio resource control (RRC) message, a layer 1 (L1) signaling, or a layer 2 (L2) signaling.

In an embodiment, the discontinuous configuration information is type-configurable configuration information, and the type-configurable configuration information is DTX configuration information and/or DRX configuration information determined based on eighth indication information;
where the DTX configuration information and/or the DRX configuration information is used to determine the DTX configuration parameter and/or the DRX configuration parameter.

In an embodiment, the discontinuous configuration information includes generic configuration parameters, and the generic configuration parameters are used to determine the DTX configuration parameter and the DRX configuration parameter; or
the discontinuous configuration information includes the DTX configuration parameter, and the DTX configuration parameter is used to determine the DTX configuration parameter; in case that the discontinuous configuration information does not include the DRX configuration parameter, the DTX configuration parameter is further used to determine the DRX configuration parameter; and
the discontinuous configuration information includes the DRX configuration parameter, and the DRX configuration parameter is used to determine the DRX configuration parameter; in case that the discontinuous configuration information does not include the DTX configuration parameter, the DRX configuration parameter is further used to determine the DTX configuration parameter; or
the discontinuous configuration information includes at least one of a common parameter, a DTX partial parameter, or a DRX partial parameter, where the common parameter and the DTX partial parameter are used to determine the DTX configuration parameter, and the common parameter and the DRX partial parameter are used to determine the DRX configuration parameter.

In an embodiment, the DTX configuration parameter includes at least one of the following:
a DTX cycle, a start position offset of a DTX on or active period, a duration of a DTX on or active period, a start position of a DTX on or active period, an end position of a DTX on or active period, an end position offset of a DTX on or active period, a start position offset of a DTX off or non-active period, a duration of a DTX off or non-active period, a start position of a DTX off or non-active period, an end position of a DTX off or non-active period, or an end position offset of a DTX off or non-active period; and
the DRX configuration parameter includes at least one of the following:
   a DRX cycle, a start position offset of a DRX on or active period, a duration of a DRX on or active period, a start position of a DRX on or active period, an end position of a DRX on or active period, an end position offset of a DRX on or active period, a start position offset of a DRX off or non-active period, a duration of a DRX off or non-active period, a start position of a DRX off or non-active period, an end position of a DRX off or non-active period, or an end position offset of a DRX off or non-active period.

In an embodiment, the DTX cycle or the DRX cycle includes a duration of at least one DTX or DRX on or active period.

In an embodiment, according to the configuration method of the present application, the DTX and DRX include a first DTX, a first DRX, a second DTX, and a second DRX;
a first DTX non-active period includes at least one second DTX active period and/or at least one second DRX active period; and/or
a first DRX non-active period includes at least one second DTX active period and/or at least one second DRX active period.

The above-mentioned configuration apparatus according to the embodiments of the present application may implement all the method steps implemented by the above-mentioned method embodiments, performed by the terminal and may achieve the same effect. The same parts and beneficial effects as the same method embodiments will not be repeated here.

FIG. 8 is a second schematic structural diagram of a configuration apparatus according to an embodiment of the present application. As shown in FIG. 8, the configuration apparatus includes:
a determining unit 810, used for determining configuration information, where the configuration information includes at least one piece of discontinuous configuration information, the discontinuous configuration information is used to determine a DTX configuration parameter and/or a DRX configuration parameter; and
a transmitting unit 820, used for transmitting the configuration information to a terminal.

The above-mentioned configuration apparatus according to the embodiments of the present application may implement all the method steps implemented by the above-mentioned method embodiments, performed by the network device and may achieve the same effect. The same parts and beneficial effects as the same method embodiments will not be repeated here.

It should be noted that, the division of units/modules in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as a separate product, it may be stored in a computer readable storage medium. Based on such understanding, the technical solutions of the present application in essence or a part of the technical solutions that contributes to the prior art, or all or part of the technical solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store a program code such as a flash drive, a mobile hard disk, a read-only memory (ROM), a random access memory (RAM), a magnetic disk, or a compact disk.

An embodiment of the present application further provides a processor-readable storage medium storing a computer program, where the computer program, when executed by a processor, causes the processor to perform the methods provided in above embodiments. The method includes:
receiving configuration information, where the configuration information includes at least one piece of discontinuous configuration information, the discontinuous configuration information is used to determine a DTX configuration parameter and/or a DRX configuration parameter; and
determining DTX and/or DRX for a network device based on the configuration information; or
determining configuration information, where the configuration information includes at least one piece of discontinuous configuration information, the discontinuous configuration information is used to determine a DTX configuration parameter and/or a DRX configuration parameter; and
transmitting the configuration information to a terminal.

It should be noted that the processor-readable storage medium may be any available medium or data storage device that may be accessed by a processor, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

In addition, the solutions according to the embodiments of the present application may be applicable to various systems, especially 5G systems. For example, applicable systems may be a global system of mobile communication (GSM) system, a code division multiple access (CDMA) system, a wideband code division multiple access (WCDMA) general packet radio service (GPRS) system, a long term evolution (LTE) system, a LTE frequency division duplex (FDD) system, a LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device. The system may also include a core network part, such as an evolved packet system (EPS), a 5G system (5GS), and the like.

The terminal device involved in the embodiments of the present application may be a device that provides voice and/or data connectivity to a user, a hand-held device with a wireless connection function, or other processing device connected to a wireless modem. In different systems, the names of the terminal device may be different. For example, in the 5G system, the terminal device may be referred to as a user equipment (UE). A wireless terminal may communicate with one or more core networks (CN) via a radio access network (RAN), and the wireless terminal may be a mobile terminal, such as a mobile phone (or referred as to cellular phone) and computers with mobile terminal, e.g., a portable mobile device, a pocket-sized mobile device, a hand-held mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be referred to as a system, a subscriber unit, a subscriber station, a mobile station, a mobile, a remote station, an access point, a remote terminal, an access terminal, a user terminal, a user agent, and a user device, which are not limited in the embodiments of the present application.

The network device involved in the embodiments of the present application may be a base station, and the base station may include multiple cells providing services for a terminal. Depending on specific application scenarios, the base station may also be referred as to an access point, or may be a device in the access network that communicates with a wireless terminal device through one or more sectors on the air interface, or other names. The network device may be used to mutually exchange received air frames with Internet Protocol (IP) packets, and act as a router between a wireless terminal device and a rest part of the access network, and the rest part of the access network may include an IP communication network. The network device may also coordinate attribute management for the air interface. For example, the network device involved in the embodiments of the present application may be a base transceiver station (BTS) in a global system for mobile communications (GSM) or a code division multiple access (CDMA), may also be a node B in a wide-band code division multiple access (WCDMA), may also be an evolutional node B (eNB or e-Node B) in a long term evolution (LTE) system, a 5G base station (gNB) in 5G network architecture (next generation system), may also be a Home evolved Node B (HeNB), a relay node, a femto, a pico base station (pico), etc., which are not limited in the embodiments of the present application. In some network structures, a network device may include a centralized unit (CU) node and a distributed unit (DU) node, and the centralized unit and the distributed unit may also be geographically separated.

Multi-input multi-output (MIMO) transmission may be performed between the network device and the terminal device using one or more antennas and the MIMO transmission may be single user MIMO (SU-MIMO) or multiple user MIMO (MU-MIMO). According to the form and number of antenna combinations, MIMO transmission may be 2D-MIMO, 3D-MIMO, FD-MIMO, or massive-MIMO, and may also be diversity transmission, precoding transmission, or beamforming transmission.

As appreciated by those skilled in the art, embodiments of the present disclosure may be provided as a method, a system, or a computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It should be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It is apparent to those skilled in the art that various modifications and variations may be made in the present application without departing from the scope of the present application. As such, provided that these modifications and variations of the present application fall within the scope of the claims of the present application and their equivalents, the present application is also intended to cover such modifications and variations.

## Claims

1. A configuration method, comprising:
receiving configuration information, wherein the configuration information comprises at least one piece of discontinuous configuration information, the discontinuous configuration information is used to determine a discontinuous transmission (DTX) configuration parameter and/or a discontinuous reception (DRX) configuration parameter; and
determining DTX and/or DRX for a network device based on the configuration information.

2. The method of claim 1, wherein in case that multiple pieces of discontinuous configuration information are present, determining the DTX and/or DRX for the network device based on the configuration information comprises:
determining a piece of valid discontinuous configuration information from the multiple pieces of discontinuous configuration information; and
determining the DTX and/or DRX based on the valid discontinuous configuration information.

3. The method of claim 2, wherein determining the valid discontinuous configuration information from the multiple pieces of discontinuous configuration information comprises:
determining the valid discontinuous configuration information from the multiple pieces of discontinuous configuration information based on indication information, at least one of an information type or a priority of the multiple pieces of discontinuous configuration information.

4. The method of claim 3, wherein determining the valid discontinuous configuration information from the multiple pieces of discontinuous configuration information based on the indication information comprises:
determining the valid discontinuous configuration information from the multiple pieces of discontinuous configuration information based on first indication information; and/or
determining a piece of invalid discontinuous configuration information and the valid discontinuous configuration information from the multiple pieces of discontinuous configuration information based on second indication information;
wherein the first indication information and the second indication information belong to the indication information.

5. The method of claim 3, wherein determining the valid discontinuous configuration information from the multiple pieces of discontinuous configuration information based on at least one of the information type or the priority of the multiple pieces of discontinuous configuration information comprises:
determining discontinuous configuration information with the information type of default as the valid discontinuous configuration information from the multiple pieces of discontinuous configuration information; and/or
determining discontinuous configuration information with the priority of first priority as the valid discontinuous configuration information from the multiple pieces of discontinuous configuration information.

6. The method of claim 3, wherein in case that the multiple pieces of discontinuous configuration information comprise at least one piece of discontinuous configuration information with the information type of default and/or at least one piece of discontinuous configuration information with the priority of first priority, determining the valid discontinuous configuration information from the multiple pieces of discontinuous configuration information based on the indication information, at least one of the information type or the priority of the multiple pieces of discontinuous configuration information comprises:
determining the valid discontinuous configuration information from the multiple pieces of discontinuous configuration information or from discontinuous configuration information with the information type of candidate and/or discontinuous configuration information with the priority of second priority based on third indication information; and/or
determining the valid discontinuous configuration information and invalid discontinuous configuration information from the multiple pieces of discontinuous configuration information or from discontinuous configuration information with the information type of candidate and/or discontinuous configuration information with the priority of second priority based on fourth indication information;
wherein the third indication information and the fourth indication information belong to the indication information.

7. The method of claim 3, wherein the discontinuous configuration information with the information type of default is discontinuous configuration information corresponding to a minimum DTX identifier or a minimum DRX identifier or a minimum discontinuous configuration information identifier, wherein the DTX identifier, the DRX identifier and the discontinuous configuration information identifier are used to identify the discontinuous configuration information.

8. The method of claim 2, further comprising:
determining invalid discontinuous configuration information from the multiple pieces of discontinuous configuration information based on fifth indication information; and/or
adjusting the discontinuous configuration information based on sixth indication information;
wherein the fifth indication information and the sixth indication information belong to the indication information.

9. The method of claim 3, further comprising:
obtaining the indication information based on at least one of the following:
a broadcast message, a multicast message, a radio resource control (RRC) message, a layer 1 (L1) signaling, or a layer 2 (L2) signaling.

10. The method of claim 3, wherein a valid duration of the indication information is configured by a higher layer signaling, or protocol-agreed; the valid duration is a fixed time period or a first given quantity of a DTX or DRX cycle.

11. The method of claim 2, wherein the multiple pieces of discontinuous configuration information are applied to a same carrier or bandwidth partial (BWP), and/or applied to different carriers or BWPs.

12. The method of claim 1, wherein determining the DTX and/or DRX for the network device based on the configuration information comprises:
determining all discontinuous configuration information comprised in the configuration information as valid discontinuous configuration information; and
determining the DTX and/or DRX based on the valid discontinuous configuration information.

13. The method of claim 1, wherein after determining the DTX and/or DRX for the network device based on the configuration information, the method further comprises:
receiving seventh indication information, wherein the seventh indication information is used to indicate at least one of validation, invalidation or adjustment of discontinuous configuration information corresponding to the DTX and/or DRX.

14. The method of claim 13, wherein
in case that the seventh indication information is received within a first transmission occasion, the seventh indication information is used to indicate validation or invalidation of a first DTX among DTXs for the network device and/or a first DRX among DRXs for the network device, or used to adjust discontinuous configuration information corresponding to a first DTX and/or a first DRX, and the first transmission occasion is a second given quantity of time units before a first DTX or first DRX active period; and
in case that the seventh indication information is received within a second transmission occasion, the seventh indication information is used to indicate validation or invalidation of at least one of a first DTX or a second DTX among DTXs for the network device and/or a first DRX or a second DRX among DRXs for the network device, or used to adjust discontinuous configuration information corresponding to at least one of a first DTX, a second DTX, a first DRX or a second DTX, and the second transmission occasion is a first DTX or first DRX active period.

15. The method of any of claims 1 to 14, further comprising:
transmitting a configuration request to the network device, wherein the configuration request is used to request at least one of the following:
validation of discontinuous configuration information;
adjustment of discontinuous configuration information; or
invalidation of discontinuous configuration information.

16. The method of claim 15, wherein transmitting the configuration request to the network device comprises:
transmitting the configuration request to the network device in a third transmission occasion, or in a fourth transmission occasion;
wherein the third transmission occasion is a third given quantity of time units before a first DTX active period among DTXs for the network device or a first DRX among DRXs for the network device, and the fourth transmission occasion is a first DTX or first DRX active period.

17. The method of any of claims 1 to 14, wherein in case that at least one piece of configuration information is present, the method further comprises:
obtaining the configuration information based on at least one of the following: a broadcast message, a multicast message, a radio resource control (RRC) message, a layer 1 (L1) signaling, or a layer 2 (L2) signaling.

18. The method of any of claims 1 to 14, wherein
the discontinuous configuration information is type-configurable configuration information, and the type-configurable configuration information is DTX configuration information and/or DRX configuration information determined based on eighth indication information;
wherein the DTX configuration information and/or the DRX configuration information is used to determine the DTX configuration parameter and/or the DRX configuration parameter.

19. The method of any of claims 1 to 14, wherein the discontinuous configuration information comprises generic configuration parameters, and the generic configuration parameters are used to determine the DTX configuration parameter and the DRX configuration parameter;
or
the discontinuous configuration information comprises the DTX configuration parameter, and the DTX configuration parameter is used to determine the DTX configuration parameter; in case that the discontinuous configuration information does not comprise the DRX configuration parameter, the DTX configuration parameter is further used to determine the DRX configuration parameter; and
the discontinuous configuration information comprises the DRX configuration parameter, and the DRX configuration parameter is used to determine the DRX configuration parameter; in case that the discontinuous configuration information does not comprise the DTX configuration parameter, the DRX configuration parameter is further used to determine the DTX configuration parameter;
or
the discontinuous configuration information comprises at least one of a common parameter, a DTX partial parameter, or a DRX partial parameter, wherein the common parameter and the DTX partial parameter are used to determine the DTX configuration parameter, and the common parameter and the DRX partial parameter are used to determine the DRX configuration parameter.

20. The method of any of claims 1 to 14, wherein the DTX configuration parameter comprises at least one of the following:
a DTX cycle, a start position offset of a DTX on or active period, a duration of a DTX on or active period, a start position of a DTX on or active period, an end position of a DTX on or active period, an end position offset of a DTX on or active period, a start position offset of a DTX off or non-active period, a duration of a DTX off or non-active period, a start position of a DTX off or non-active period, an end position of a DTX off or non-active period, or an end position offset of a DTX off or non-active period; and
the DRX configuration parameter comprises at least one of the following:
a DRX cycle, a start position offset of a DRX on or active period, a duration of a DRX on or active period, a start position of a DRX on or active period, an end position of a DRX on or active period, an end position offset of a DRX on or active period, a start position offset of a DRX off or non-active period, a duration of a DRX off or non-active period, a start position of a DRX off or non-active period, an end position of a DRX off or non-active period, or an end position offset of a DRX off or non-active period.

21. The method of claim 20, wherein the DTX cycle or the DRX cycle comprises a duration of at least one DTX or DRX on or active period.

22. The method of any of claims 1 to 14, wherein the DTX and the DRX comprise a first DTX, a first DRX, a second DTX, and a second DRX;
a first DTX non-active period comprises at least one second DTX active period and/or at least one second DRX active period; and/or
a first DRX non-active period comprises at least one second DTX active period and/or at least one second DRX active period.

23. A configuration method, comprising:
determining configuration information, wherein the configuration information comprises at least one piece of discontinuous configuration information, the discontinuous configuration information is used to determine a discontinuous transmission (DTX) configuration parameter and/or a discontinuous reception (DRX) configuration parameter; and
transmitting the configuration information to a terminal.

24. A terminal, comprising a memory, a transceiver and a processor,
wherein the memory is used for storing a computer program; the transceiver is used for receiving and transmitting data under control of the processor; the processor is used for reading the computer program in the memory and performing the following operations:
receiving configuration information, wherein the configuration information comprises at least one piece of discontinuous configuration information, the discontinuous configuration information is used to determine a discontinuous transmission (DTX) configuration parameter and/or a discontinuous reception (DRX) configuration parameter; and
determining DTX and/or DRX for a network device based on the configuration information.

25. The terminal of claim 24, wherein in case that multiple pieces of discontinuous configuration information are present, determining the DTX and/or DRX for the network device based on the configuration information comprises:
determining a piece of valid discontinuous configuration information from the multiple pieces of discontinuous configuration information; and
determining the DTX and/or DRX based on the valid discontinuous configuration information.

26. The terminal of claim 25, wherein determining the valid discontinuous configuration information from the multiple pieces of discontinuous configuration information comprises:
determining the valid discontinuous configuration information from the multiple pieces of discontinuous configuration information based on indication information, at least one of an information type or a priority of the multiple pieces of discontinuous configuration information.

27. The terminal of claim 26, wherein determining the valid discontinuous configuration information from the multiple pieces of discontinuous configuration information based on the indication information comprises:
determining the valid discontinuous configuration information from the multiple pieces of discontinuous configuration information based on first indication information; and/or
determining a piece of invalid discontinuous configuration information and the valid discontinuous configuration information from the multiple pieces of discontinuous configuration information based on second indication information;
wherein the first indication information and the second indication information belong to the indication information.

28. The terminal of claim 26, wherein determining the valid discontinuous configuration information from the multiple pieces of discontinuous configuration information based on at least one of the information type or the priority of the multiple pieces of discontinuous configuration information comprises:
determining discontinuous configuration information with the information type of default as the valid discontinuous configuration information from the multiple pieces of discontinuous configuration information; and/or
determining discontinuous configuration information with the priority of first priority as the valid discontinuous configuration information from the multiple pieces of discontinuous configuration information.

29. The terminal of claim 26, wherein in case that the multiple pieces of discontinuous configuration information comprise at least one piece of discontinuous configuration information with the information type of default and/or at least one piece of discontinuous configuration information with the priority of first priority, determining the valid discontinuous configuration information from the multiple pieces of discontinuous configuration information based on the indication information, at least one of the information type or the priority of the multiple pieces of discontinuous configuration information comprises:
determining the valid discontinuous configuration information from the multiple pieces of discontinuous configuration information or from discontinuous configuration information with the information type of candidate and/or discontinuous configuration information with the priority of second priority based on third indication information; and/or
determining the valid discontinuous configuration information and invalid discontinuous configuration information from the multiple pieces of discontinuous configuration information or from discontinuous configuration information with the information type of candidate and/or discontinuous configuration information with the priority of second priority based on fourth indication information;
wherein the third indication information and the fourth indication information belong to the indication information.

30. The terminal of claim 26, wherein the discontinuous configuration information with the information type of default is discontinuous configuration information corresponding to a minimum DTX identifier or a minimum DRX identifier or a minimum discontinuous configuration information identifier, wherein the DTX identifier, the DRX identifier and the discontinuous configuration information identifier are used to identify the discontinuous configuration information.

31. The terminal of claim 25, wherein the operations further comprise:
determining invalid discontinuous configuration information from the multiple pieces of discontinuous configuration information based on fifth indication information; and/or
adjusting the discontinuous configuration information based on sixth indication information;
wherein the fifth indication information and the sixth indication information belong to the indication information.

32. The terminal of claim 26, wherein the operations further comprise:
obtaining the indication information based on at least one of the following:
a broadcast message, a multicast message, a radio resource control (RRC) message, a layer 1 (L1) signaling, or a layer 2 (L2) signaling.

33. The terminal of claim 26, wherein a valid duration of the indication information is configured by a higher layer signaling, or protocol-agreed; the valid duration is a fixed time period or a first given quantity of a DTX or DRX cycle.

34. The terminal of claim 25, wherein the multiple pieces of discontinuous configuration information are applied to a same carrier or bandwidth partial (BWP), and/or applied to different carriers or BWPs.

35. The terminal of claim 24, wherein determining the DTX and/or DRX for the network device based on the configuration information comprises:
determining all discontinuous configuration information comprised in the configuration information as valid discontinuous configuration information; and
determining the DTX and/or DRX based on the valid discontinuous configuration information.

36. The terminal of claim 24, wherein after determining the DTX and/or DRX for the network device based on the configuration information, the method further comprises:
receiving seventh indication information, wherein the seventh indication information is used to indicate at least one of validation, invalidation or adjustment of discontinuous configuration information corresponding to the DTX and/or DRX.

37. The terminal of claim 36, wherein
in case that the seventh indication information is received within a first transmission occasion, the seventh indication information is used to indicate validation or invalidation of a first DTX among DTXs for the network device and/or a first DRX among DRXs for the network device, or used to adjust discontinuous configuration information corresponding to a first DTX and/or a first DRX, and the first transmission occasion is a second given quantity of time units before a first DTX or first DRX active period; and
in case that the seventh indication information is received within a second transmission occasion, the seventh indication information is used to indicate validation or invalidation of at least one of a first DTX or a second DTX among DTXs for the network device and/or a first DRX or a second DRX among DRXs for the network device, or used to adjust discontinuous configuration information corresponding to at least one of a first DTX, a second DTX, a first DRX or a second DTX, and the second transmission occasion is a first DTX or first DRX active period.

38. The terminal of any of claims 24 to 37, wherein the operations further comprise:
transmitting a configuration request to the network device, wherein the configuration request is used to request at least one of the following:
validation of discontinuous configuration information;
adjustment of discontinuous configuration information; or
invalidation of discontinuous configuration information.

39. The terminal of claim 38, wherein transmitting the configuration request to the network device comprises:
transmitting the configuration request to the network device in a third transmission occasion, or in a fourth transmission occasion;
wherein the third transmission occasion is a third given quantity of time units before a first DTX active period among DTXs for the network device or a first DRX among DRXs for the network device, and the fourth transmission occasion is a first DTX or first DRX active period.

40. The terminal of any of claims 24 to 37, wherein in case that at least one piece of configuration information is present, the operations further comprise:
obtaining the configuration information based on at least one of the following: a broadcast message, a multicast message, a radio resource control (RRC) message, a layer 1 (L1) signaling, or a layer 2 (L2) signaling.

41. The terminal of any one of claims 24 to 37, wherein
the discontinuous configuration information is type-configurable configuration information, and the type-configurable configuration information is DTX configuration information and/or DRX configuration information determined based on eighth indication information;
wherein the DTX configuration information and/or the DRX configuration information is used to determine the DTX configuration parameter and/or the DRX configuration parameter.

42. The terminal of any of claims 24 to 37, wherein the discontinuous configuration information comprises generic configuration parameters, and the generic configuration parameters are used to determine the DTX configuration parameter and the DRX configuration parameter; or
the discontinuous configuration information comprises the DTX configuration parameter, and the DTX configuration parameter is used to determine the DTX configuration parameter; in case that the discontinuous configuration information does not comprise the DRX configuration parameter, the DTX configuration parameter is further used to determine the DRX configuration parameter; and
the discontinuous configuration information comprises the DRX configuration parameter, and the DRX configuration parameter is used to determine the DRX configuration parameter; in case that the discontinuous configuration information does not comprise the DTX configuration parameter, the DRX configuration parameter is further used to determine the DTX configuration parameter; or
the discontinuous configuration information comprises at least one of a common parameter, a DTX partial parameter, or a DRX partial parameter, where the common parameter and the DTX partial parameter are used to determine the DTX configuration parameter, and the common parameter and the DRX partial parameter are used to determine the DRX configuration parameter.

43. The terminal of any of claims 24 to 37, wherein the DTX configuration parameter comprises at least one of the following:
a DTX cycle, a start position offset of a DTX on or active period, a duration of a DTX on or active period, a start position of a DTX on or active period, an end position of a DTX on or active period, an end position offset of a DTX on or active period, a start position offset of a DTX off or non-active period, a duration of a DTX off or non-active period, a start position of a DTX off or non-active period, an end position of a DTX off or non-active period, or an end position offset of a DTX off or non-active period; and
the DRX configuration parameter comprises at least one of the following:
a DRX cycle, a start position offset of a DRX on or active period, a duration of a DRX on or active period, a start position of a DRX on or active period, an end position of a DRX on or active period, an end position offset of a DRX on or active period, a start position offset of a DRX off or non-active period, a duration of a DRX off or non-active period, a start position of a DRX off or non-active period, an end position of a DRX off or non-active period, or an end position offset of a DRX off or non-active period.

44. The terminal of claim 43, wherein the DTX cycle or the DRX cycle comprises a duration of at least one DTX or DRX on or active period.

45. The terminal of any of claims 24 to 37, wherein the DTX and the DRX comprise a first DTX, a first DRX, a second DTX, and a second DRX;
a first DTX non-active period comprises at least one second DTX active period and/or at least one second DRX active period; and/or
a first DRX non-active period comprises at least one second DTX active period and/or at least one second DRX active period.

46. A network device, comprising a memory, a transceiver and a processor,
wherein the memory is used for storing a computer program; the transceiver is used for receiving and sending data under control of the processor; and the processor is used for reading the computer program in the memory and performing the following operations:
determining configuration information, wherein the configuration information comprises at least one piece of discontinuous configuration information, the discontinuous configuration information is used to determine a discontinuous transmission (DTX) configuration parameter and/or a discontinuous reception (DRX) configuration parameter; and
transmitting the configuration information to a terminal.

47. A configuration apparatus, comprising:
a receiving unit, used for receiving configuration information, wherein the configuration information comprises at least one piece of discontinuous configuration information, the discontinuous configuration information is used to determine a discontinuous transmission (DTX) configuration parameter and/or a discontinuous reception (DRX) configuration parameter; and
a configuring unit, used for determining DTX and/or DRX for a network device based on the configuration information.

48. The apparatus of claim 47, wherein in case that multiple pieces of discontinuous configuration information are present, the configuring unit comprises:
a selecting subunit, used for determining a piece of valid discontinuous configuration information from the multiple pieces of discontinuous configuration information; and
a configuring subunit, used for determining the DTX and/or DRX based on the valid discontinuous configuration information.

49. The apparatus of claim 48, wherein the selecting subunit is used for:
determining the valid discontinuous configuration information from the multiple pieces of discontinuous configuration information based on indication information, at least one of an information type or a priority of the multiple pieces of discontinuous configuration information.

50. The apparatus of claim 49, wherein the selecting subunit is used for:
determining the valid discontinuous configuration information from the multiple pieces of discontinuous configuration information based on first indication information; and/or
determining a piece of invalid discontinuous configuration information and the valid discontinuous configuration information from the multiple pieces of discontinuous configuration information based on second indication information;
wherein the first indication information and the second indication information belong to the indication information.

51. The apparatus of claim 49, wherein the selecting subunit is used for:
determining discontinuous configuration information with the information type of default as the valid discontinuous configuration information from the multiple pieces of discontinuous configuration information; and/or
determining discontinuous configuration information with the priority of first priority as the valid discontinuous configuration information from the multiple pieces of discontinuous configuration information.

52. The apparatus of claim 49, wherein in case that the multiple pieces of discontinuous configuration information comprise at least one piece of discontinuous configuration information with the information type of default and/or at least one piece of discontinuous configuration information with the priority of first priority, the selecting subunit is used for:
determining the valid discontinuous configuration information from the multiple pieces of discontinuous configuration information or from discontinuous configuration information with the information type of candidate and/or discontinuous configuration information with the priority of second priority based on third indication information; and/or
determining the valid discontinuous configuration information and invalid discontinuous configuration information from the multiple pieces of discontinuous configuration information or from discontinuous configuration information with the information type of candidate and/or discontinuous configuration information with the priority of second priority based on fourth indication information;
wherein the third indication information and the fourth indication information belong to the indication information.

53. The apparatus of claim 49, wherein the discontinuous configuration information with the information type of default is discontinuous configuration information corresponding to a minimum DTX identifier or a minimum DRX identifier or a minimum discontinuous configuration information identifier, wherein the DTX identifier, the DRX identifier and the discontinuous configuration information identifier are used to identify the discontinuous configuration information.

54. The apparatus of claim 48, wherein the configuring unit is further used for:
determining invalid discontinuous configuration information from the multiple pieces of discontinuous configuration information based on fifth indication information; and/or
adjusting the discontinuous configuration information based on sixth indication information;
wherein the fifth indication information and the sixth indication information belong to the indication information.

55. The apparatus of claim 49, wherein the receiving unit is further used for:
obtaining the indication information based on at least one of the following:
a broadcast message, a multicast message, a radio resource control (RRC) message, a layer 1 (L1) signaling, or a layer 2 (L2) signaling.

56. The apparatus of claim 49, wherein a valid duration of the indication information is configured by a higher layer signaling, or protocol-agreed; the valid duration is a fixed time period or a first given quantity of a DTX or DRX cycle.

57. The apparatus of claim 48, wherein the multiple pieces of discontinuous configuration information are applied to a same carrier or bandwidth partial (BWP), and/or applied to different carriers or BWPs.

58. The apparatus of claim 47, wherein the configuring unit is used for:
determining all discontinuous configuration information comprised in the configuration information as valid discontinuous configuration information; and
determining the DTX and/or DRX based on the valid discontinuous configuration information.

59. The apparatus of claim 47, further comprising an adjusting unit used for:
receiving seventh indication information, wherein the seventh indication information is used to indicate at least one of validation, invalidation or adjustment of discontinuous configuration information corresponding to the DTX and/or DRX.

60. The apparatus of claim 59, wherein
in case that the seventh indication information is received within a first transmission occasion, the seventh indication information is used to indicate validation or invalidation of a first DTX among DTXs for the network device and/or a first DRX among DRXs for the network device, or used to adjust discontinuous configuration information corresponding to a first DTX and/or a first DRX, and the first transmission occasion is a second given quantity of time units before a first DTX or first DRX active period; and
in case that the seventh indication information is received within a second transmission occasion, the seventh indication information is used to indicate validation or invalidation of at least one of a first DTX or a second DTX among DTXs for the network device and/or a first DRX or a second DRX among DRXs for the network device, or used to adjust discontinuous configuration information corresponding to at least one of a first DTX, a second DTX, a first DRX or a second DTX, and the second transmission occasion is a first DTX or first DRX active period.

61. The apparatus of any of claims 47 to 60, further comprising a requesting unit used for:
transmitting a configuration request to the network device, wherein the configuration request is used to request at least one of the following:
validation of discontinuous configuration information;
adjustment of discontinuous configuration information; or
invalidation of discontinuous configuration information.

62. The apparatus of claim 61, wherein the requesting unit is used for:
transmitting the configuration request to the network device in a third transmission occasion, or in a fourth transmission occasion;
wherein the third transmission occasion is a third given quantity of time units before a first DTX active period among DTXs for the network device or a first DRX among DRXs for the network device, and the fourth transmission occasion is a first DTX or first DRX active period.

63. The apparatus of one of claims 47 to 60, wherein in case that at least one piece of configuration information is present, the receiving unit is used for:
obtaining the configuration information based on at least one of the following: a broadcast message, a multicast message, a radio resource control (RRC) message, a layer 1 (L1) signaling, or a layer 2 (L2) signaling.

64. The apparatus of one of claims 47 to 60, wherein
the discontinuous configuration information is type-configurable configuration information, and the type-configurable configuration information is DTX configuration information and/or DRX configuration information determined based on eighth indication information;
wherein the DTX configuration information and/or the DRX configuration information is used to determine the DTX configuration parameter and/or the DRX configuration parameter.

65. The apparatus of any of claims 47 to 60, wherein the discontinuous configuration information comprises generic configuration parameters, and the generic configuration parameters are used to determine the DTX configuration parameter and the DRX configuration parameter;
or
the discontinuous configuration information comprises the DTX configuration parameter, and the DTX configuration parameter is used to determine the DTX configuration parameter; in case that the discontinuous configuration information does not comprise the DRX configuration parameter, the DTX configuration parameter is further used to determine the DRX configuration parameter; and
the discontinuous configuration information comprises the DRX configuration parameter, and the DRX configuration parameter is used to determine the DRX configuration parameter; in case that the discontinuous configuration information does not comprise the DTX configuration parameter, the DRX configuration parameter is further used to determine the DTX configuration parameter;
or
the discontinuous configuration information comprises at least one of a common parameter, a DTX partial parameter, or a DRX partial parameter, where the common parameter and the DTX partial parameter are used to determine the DTX configuration parameter, and the common parameter and the DRX partial parameter are used to determine the DRX configuration parameter.

66. The apparatus of any of claims 47 to 60, wherein the DTX configuration parameter comprises at least one of the following:
a DTX cycle, a start position offset of a DTX on or active period, a duration of a DTX on or active period, a start position of a DTX on or active period, an end position of a DTX on or active period, an end position offset of a DTX on or active period, a start position offset of a DTX off or non-active period, a duration of a DTX off or non-active period, a start position of a DTX off or non-active period, an end position of a DTX off or non-active period, or an end position offset of a DTX off or non-active period; and
the DRX configuration parameter comprises at least one of the following:
a DRX cycle, a start position offset of a DRX on or active period, a duration of a DRX on or active period, a start position of a DRX on or active period, an end position of a DRX on or active period, an end position offset of a DRX on or active period, a start position offset of a DRX off or non-active period, a duration of a DRX off or non-active period, a start position of a DRX off or non-active period, an end position of a DRX off or non-active period, or an end position offset of a DRX off or non-active period.

67. The apparatus of claim 66, wherein the DTX cycle or the DRX cycle comprises a duration of at least one DTX or DRX on or active period.

68. The apparatus of any of claims 47 to 60, wherein the DTX and the DRX comprise a first DTX, a first DRX, a second DTX, and a second DRX;
a first DTX non-active period comprises at least one second DTX active period and/or at least one second DRX active period; and/or
a first DRX non-active period comprises at least one second DTX active period and/or at least one second DRX active period.

69. A configuration apparatus, comprising:
a determining unit, used for determining configuration information, wherein the configuration information comprises at least one piece of discontinuous configuration information, the discontinuous configuration information is used to determine a discontinuous transmission (DTX) configuration parameter and/or a discontinuous reception (DRX) configuration parameter; and
a transmitting unit, used for transmitting the configuration information to a terminal.

70. A processor-readable storage medium, wherein the processor-readable storage medium stores a computer program and the computer program is used for causing a processor to perform the configuration method of any of claims 1 to 23.
